# EUROPEAN PATENT SPECIFICATION

(11) **EP 2 470 570 B1**
(45) Date of publication and mention of the grant of the patent: **08.01.2014**
(21) Application number: 10749609.3
(22) Date of filing: 24.08.2010
(51) Int. Cl.: C08F 2/20, C08F 220/56

(54) **ANIONIC CROSS-LINKED POLYMERS IN WATER-IN-WATER POLYMER DISPERSIONS**
Anionische quervernetzte Polymere in Wasser-in-Wasser-Polymerdispersionen
Polymères réticulés anioniques dans des dispersions de polymère d'eau dans l'eau

(30) Priority: 24.08.2009 EP 09010796
(43) Date of publication of application: 04.07.2012
(73) Proprietor: Ashland Licensing And Intellectual Property, LLC, Dublin, OH 43017 (US)
(72) Inventor: BRÖCHER, Markus, 45470 Mülheim an der Ruhr (DE); KANTO OEQVIST, Charlotta, 47906 Kempen (DE); SIEVERLING, Nathalie, 47051 Duisburg (DE)
(74) Representative: Bülle, Jan
(86) International application number: PCT/EP2010/005164
(87) International publication number: WO 2011/023358

(56) References cited:
- WO-A1-01/18064
- WO-A1-2005/092954
- WO-A2-2006/123993

## Description

### FIELD OF THE INVENTION

The present invention relates to water-in-water polymer dispersions containing cross-linked anionic polymers, methods for their preparation and their use. The water-in-water polymer dispersions are useful *inter alia* as flocculants, dewatering (drainage) aids and retention aids in papermaking.

### BACKGROUND ART

In the manufacture of paper, a papermaking furnish, i.e. an aqueous slurry of cellulosic fiber having a water content of usually more than 95 wt.-% is formed into a paper sheet typically having a water content of less than 5 wt.-%. Hence, the dewatering (drainage) and retention aspects of papermaking are important to the efficiency and cost of the manufacture. Typically, a cellulosic thin stock is drained on a moving screen to form a sheet which is then dried. It is well known to apply water soluble polymers to the cellulosic suspension in order to effect flocculation of the cellulosic solids and enhance drainage on the moving screen. According to a well known method for papermaking, a cellulosic suspension is formed, flocculated by means of a flocculant, mechanically sheared, optionally re-flocculated by means of a re-flocculant, drained on a screen to form a sheet and then dried.

WO/2005/092954 relates to processes for the preparation of anionic water-in-water polymer dispersions which contain at least one finely distributed, water-soluble and/or water-swellable polymer A and a continuous aqueous phase which contains at least one polymeric dispersing agent, to the water-in-water polymer dispersions obtainable thereby and to their use as auxiliaries in papermaking and/or as flocculating agents for the sedimentation of solids.

US 2004/0046158 discloses the use of water-in-water polymer dispersions for fire protection and firefighting.

The properties of the polymer dispersions of the prior art are, however, not satisfactory in every respect.

### SUMMARY OF THE INVENTION

A first aspect of the invention relates to a method for manufacturing a water-in-water polymer dispersion which comprises subjecting an aqueous reaction mixture comprising
(i) an anionic polymeric dispersant and
(ii) a monomer composition comprising
   a) at least 5 wt.-%, preferably at least 20 wt.-% of a non-ionic monomer according to general formula (I) 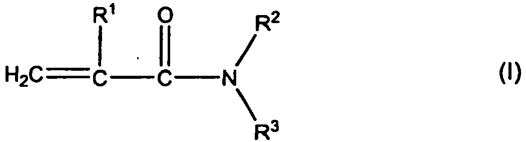 wherein
      R¹ means hydrogen or C₁-C₃-alkyl; and
      R² and R³ mean, independently of each other, hydrogen, C₁-C₅-alkyl or C₁-C₅-hydroxyalkyl;
      based on the total weight of monomers;
   b) at least 5 wt.-%, preferably at least 20 wt.-% of a radically polymerizable anionic monomer;
   c) 0.0001 to 1.25 wt.-% of one or more preferably ethylenically unsaturated cross-linkers, based on the total weight of monomers;
   d) 0 to 1.25 wt.-% of one or more hydrophobic (meth)acrylic acid C₄₋₁₈-alkyl esters, based on the total weight of monomers; and
   e) optionally, further ethylenically unsaturated monomers;
to a free radical polymerization reaction such that the resulting water-in-water polymer dispersion contains a cross-linked anionic copolymer. Said cross-linked anionic copolymer is preferably water-soluble or water-swellable.

It has been surprisingly found that the water-in-water polymer dispersions thus obtained have improved properties, particularly under shear conditions, with respect to dewatering of mud, paper retention and ash retention.

The *in situ* copolymerization of the non-ionic monomer according to general formula (I), the radically polymerizable anionic monomer, and the one or more preferably ethylenically unsaturated cross-linkers in the aqueous reaction mixture in the presence of the anionic polymeric dispersant yields a water-in-water polymer dispersion wherein the resultant cross-linked anionic copolymer is intercalated in the anionic polymeric dispersant thereby forming an interpenetrating complex.

Water-in-water polymer dispersions of this type are not obtainable by polymerizing the monomers in absence of the anionic polymeric dispersant and adding the anionic polymeric dispersant thereafter, but require the presence of the anionic polymeric dispersant during the polymerization reaction *in situ.* Otherwise, different products exhibiting different properties are obtained. In particular, when adding an aqueous dispersion of an anionic polymeric dispersant to a water-in-water polymer dispersion that has been obtained separately by polymerizing the non-ionic monomer according to general formula (I), the radically polymerizable anionic monomer, and the one or more preferably ethylenically unsaturated cross-linkers, a gel block would be obtained that could not be properly handled any further. Depending on the total concentration of the monomers, it would practically be impossible to homogeneously distribute the anionic polymeric dispersant in the water phase of the water-in-water polymer dispersion in order to form an interpenetrating complex. Further, when trying to subsequently introduce the anionic polymeric dispersant in form of an aqueous solution, the water content thereof would dilute the overall composition.

### BRIEF DESCRIPTION OF THE DRAWINGS

Figure 1 shows the effect of the polymer dispersions according to the invention on the retention in a recycled furnish.
Figure 2 shows the effect of the polymer dispersions according to the invention on the ash retention in a recycled fumish.

### DETAILED DESCRIPTION OF THE INVENTION

Water-in-water polymer dispersions are well known in the art. In this regard it can be referred to, e.g., H. Xu et al., Drug Dev Ind Pharm., 2001, 27(2), pp 171-4; K.A. Simon et al., Langmuir., 2007, 30;23(3), 1453-8; P. Hongsprabhas, International Journal of Food Science & Technology, 2007, 42(6), 658-668; D. Gudlauski, PaperAge, May/June 2005, pp 36 f, US-A 2004 0034145, US-A 2004 0046158, US-A 2005 0242045, and US-A 2007 0203290.

The standard emulsion found in the water treatment industry, however, is a water-in-oil inverse emulsion, i.e. the polymer is located in microscopic water droplets emulsified in an oil medium. In fact, the water in the droplets is not considered free since the polymer restrains it and the product is more like a dispersion of a gel in oil. A water-in-water dispersion is based on a different principle involving a polymer precipitation in water, preferably in an aqueous salt solution, e.g. brine. The final product obtained is a stable dispersion of microscopic polymer particles in water. These dispersions are solvent free, making this range of products environmentally friendly.

For the purpose of the specification the term "water-in-water polymer dispersion" refers to an aqueous system containing a water-soluble or water-swellable cross-linked anionic copolymer and an anionic polymeric dispersant, where the water-soluble or water swellable cross-linked anionic copolymer has been obtained by *in situ* polymerization of suitable monomers in the presence of said anionic polymeric dispersant.

Preferably, the water-in-water polymer dispersion according to the invention is anionic. In this regard, "anionic" means a water-in-water polymer dispersion whose total charge is negative.

The anionic polymeric dispersant as well as the water-soluble or water swellable cross-linked anionic copolymer can serve as coagulant and/or flocculant. Chemical coagulation, the alteration of suspended and colloidal particles so they adhere to each other, is one type of chemical treatment process. Coagulation is a process that causes the neutralization of charges or a reduction of the repulsion forces between particles. Flocculation is the aggregation of particles into larger agglomerations ("flocs"). Coagulation is virtually instantaneous, while flocculation requires some time for the flocs to develop. For the purpose of the specification, the term "anionic polymeric dispersant" preferably refers to a water-soluble or water-dispersible, preferably highly ionic, polymer of comparatively low molecular weight. When the overall electrical charge associated with particles and organic matter in water is positive, e.g. the cellulosic fiber suspension processed in papermaking, negatively charged dispersants are preferably added to neutralize the electrical charge.

For the purpose of the specification, the term "water-soluble", particularly when it relates to the water-solubility of monomers, preferably refers to a solubility in pure water at ambient temperature of at least 10 g l⁻¹, more preferably at least 25 g l⁻¹, still more preferably at least 50 g l⁻¹, yet more preferably at least 100 g l⁻¹, most preferably at least 250 g l⁻¹ and in particular at least 500 g l⁻¹. For the purpose of the specification, the term "water-soluble", particularly when it relates to the water-solubility of polymers, preferably refers to a solubility in pure water at ambient temperature of at least 1.0 g l⁻¹, more preferably at least 2.5 g l⁻¹, still more preferably at least 5.0 g l⁻¹, yet more preferably at least 10.0 g l⁻¹, most preferably at least 25.0 g l⁻¹ and in particular at least 50.0 g l⁻¹.

For the purpose of the specification, the term "water-swellable" preferably means that the polymer, while not water-soluble, absorbs an appreciable amount of water. Typically, the weight of the polymer increases by at least 2 wt.-%, preferably at least 5 wt.-%, after being immersed in water at room temperature, e.g., 25 °C, for 1 hour, more preferably by about 60 to about 100 times its dry weight.

For the purpose of the specification, the term "cross-linked anionic copolymer" refers to the copolymer that is obtainable by an *in situ* polymerization reaction wherein a monomer composition comprising at least 5 wt.-%, preferably at least 20 wt.-% of a non-ionic monomer according to general formula (I), b) at least 5 wt.-%, preferably at least 20 wt.-% of a radically polymerizable anionic monomer, c) 0.0001 to 1.25 wt.-% of one or more preferably ethylenically unsaturated cross-linkers, d) 0 to 1.25 wt.-% of one or more hydrophobic (meth)acrylic acid C₄-₁₈-alkyl esters, and e) optionally, further ethylenically unsaturated monomers, is radically polymerized in the presence of an anionic polymeric dispersant.

It should be emphasized that the presence of the anionic polymeric dispersant during the radical polymerization is essential for the properties of the resultant water-in-water polymer dispersion. Identical water-in-water polymer dispersions are not obtainable by polymerizing the monomers in absence of the anionic polymeric dispersant and adding the anionic polymeric dispersant thereafter. The anionic polymeric dispersant is part of a water-in-water dispersion into which the cross-linked anionic copolymer is polymerized from the monomers. In other words, the cross-linked anionic copolymer obtained by the polymerization reaction is somehow embedded in the anionic polymeric dispersant which is initially present.

The internal structure of the resulting interpenetrating polymer system of the anionic polymeric dispersant and the cross-linked anionic copolymer, however, may not be reproduced by simply mixing an anionic polymeric dispersant and a polymer separately obtained from the same monomers as the cross-linked anionic copolymer.

For the purpose of the specification, the term "(alk)acrylate" shall refer to alkacrylate as well as acrylate. In analogy, the term "(meth)acrylate" shall refer to methacrylate as well as acrylate.

For the purpose of the specification, the term "homopolymer" shall refer to a polymer obtained by polymerization of substantially a single type of monomer, whereas the term "copolymer" shall refer to a polymer obtained by polymerization of two, three, four or more different types of monomers (co-monomers).

For the purpose of the specification, "alkyl" shall mean any saturated linear, branched and/or cyclic hydrocarbon having a single binding partner, such as methyl, ethyl, n-propyl, iso-propyl, n-butyl, iso-butyl, sec-butyl, tert-butyl, pentyl, hexyl, heptyl, octyl, nonyl, decyl, isodecyl, undecyl, dodecyl, tridecyl, tetradecyl, pentadecyl, hexadecyl, heptadecyl, octadecyl, nonadecyl, eicosyl, 2-ethyl-hexyl, cyclopropyl, cyclobutyl, cyclopentyl, cyclohexyl, cycloheptyl, cyclooctyl, methylcyclohexyl, methylcyclopentylethenyl, adamantyl, and the like.

For the purpose of the specification, the term "alkylene" shall mean any saturated linear, branched and/or cyclic hydrocarbon having two binding partners, such as -CH₂CH₂-, -CH₂CH₂CH₂- and -CH₂CH(CH₃)CH₂-.

According to the method of the invention an aqueous reaction mixture comprising (i) an anionic polymeric dispersant and (ii) a monomer composition is subjected to a free radical polymerization reaction.

The aqueous reaction mixture according to the invention comprises water, preferably deionized water. The water content may vary from 0.01 to 99.99 wt.-%. In a preferred embodiment, the water content is within the range of from 10 to 90 wt.-%, more preferably 15 to 85 wt.-%, still more preferably 20 to 80 wt.-%, yet more preferably 25 to 75 wt.-%, most preferably 30 to 70 wt.-% and in particular 35 to 65 wt.-%, based on the total weight of the aqueous reaction mixture. In another preferred embodiment, the water content is within the range of from 35 to 90 wt.-%, more preferably 40 to 85 wt.-%, still more preferably 45 to 80 wt.-%, yet more preferably 50 to 75 wt.-%, most preferably 55 to 70 wt.-% and in particular 60 to 66 wt.-%, based on the total weight of the aqueous reaction mixture.

Preferably, the water content of the aqueous reaction mixture is comparatively low so that the water content of the resultant water-in-water polymer dispersion is low as well. Under these circumstances it is not necessary to evaporate large amounts of water from the product after termination of polymerization in order to obtain highly concentrated water-in-water polymer dispersions.

The aqueous reaction mixture according to the invention further comprises an anionic polymeric dispersant. Preferably, the anionic polymeric dispersant is water-soluble or water-swellable. Preferably, the content of the anionic polymeric dispersant is within the range of from 0.1 to 40 wt.-%, more preferably 0.5 to 35 wt.-%, still more preferably 1.0 to 30 wt.-%, yet more preferably 5.0 to 25 wt.-%, most preferably 10 to 20 wt.-% and in particular 12 to 16 wt.-%, based on the total weight of the aqueous reaction mixture.

Preferably, the anionic polymeric dispersant exhibits a degree of polymerization of at least 90%, more preferably at least 95%, still more preferably at least 99%, yet more preferably at least 99.9%, most preferably at least 99.95% and in particular at least 99.99%.

In a preferred embodiment, the anionic polymeric dispersant is a water-soluble polymer having a weight average molecular weight M_{w} of at most 2.0×10⁶ g/mol. Preferably, the weight average molecular weight M_{w} of the anionic polymeric dispersant is within the range of from 50,000 to 1,500,000 g mol⁻¹, more preferably 75,000 to 1,250,000 g mol⁻¹, still more preferably 100,000 to 1,000,000 g mol⁻¹, yet more preferably 120,000 to 750,000 g mol⁻¹, most preferably 140,000 to 400,000 g mol⁻¹ and in particular 150,000 to 200,000 g mol⁻¹. In a preferred embodiment, the weight average molecular weight M_{w} of the anionic polymeric dispersant is within the range of from 75,000 to 350,000 g mol⁻¹.

Preferably, the molecular weight dispersity M_{w}/Mₙ of the anionic polymeric dispersant is within the range of from 1.0 to 4.0, more preferably 1.5 to 3.5 and in particular 1.8 to 3.2. In a preferred embodiment, M_{w}/Mₙ is within the range of from 2.7±0.7, more preferably 2.7±0.5, still more preferably 2.7±0.4, yet more preferably 2.7±0.3, most preferably 2.7±0.2 and in particular 2.7±0.1.

In a preferred embodiment the anionic polymeric dispersant is a homopolymer or a copolymer. When the anionic polymeric dispersant is a homopolymer, it is derived from an anionic monomer. When the anionic polymeric dispersant is a copolymer, it is preferably derived from at least one anionic monomer and at least one non-ionic co-monomer.

In this regard, "derived from" means that the polymer backbone of the anionic polymeric dispersant comprises repetition units, i.e., repetition units are incorporated in the polymer backbone of the anionic polymeric dispersant, which repetition units are formed from the corresponding monomers in the course of the polymerization reaction. For example, when the anionic polymeric dispersant is derived from acrylic acid, the following repetition unit is incorporated in the polymer backbone:

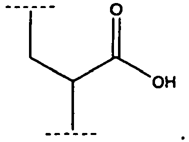

When the anionic polymeric dispersant is a copolymer of at least one anionic monomer (e.g. acrylic acid) and at least one non-ionic monomer (e.g. acrylamide), the content of the anionic monomer is preferably at least 50 wt.-%, more preferably at least 60 wt.-%, still more preferably at least 70 wt.-%, yet more preferably at least 80 wt.-%, most preferably at least 90 wt.-% and in particular at least 95 wt.-%, based on the total weight of all monomers incorporated in the anionic polymeric dispersant.

Preferably, the anionic polymeric dispersant is derived from one or more anionic monomers, more preferably from a single anionic monomer.

The anionic monomer may be present in protonated form or as a salt.

In a preferred embodiment, the anionic polymeric dispersant is derived from one or more radically polymerizable, ethylenically unsaturated monomers. Preferably, the anionic polymeric dispersant is derived from one or more anionic monomers selected from the group consisting of radically polymerizable carboxylic acids and radically polymerizable sulfonic acids or the salts thereof.

Preferably, the anionic polymeric dispersant is an anionic polymer synthesized from at least 30 wt.-%, preferably at least 50 wt.-%, more preferably 100 wt.-%, of anionic monomer units which are derived from anionic monomers, such as, for example,
■ olefinically unsaturated carboxylic acids and carboxylic acid anhydrides, in particular acrylic acid, methacrylic acid, itaconic acid, crotonic acid, glutaconic acid, maleic acid and maleic anhydride, fumaric acid and the water-soluble salts thereof, particularly the alkali metal salts thereof, alkaline earth metal salts thereof, and ammonium salts thereof;
■ olefinically unsaturated sulfonic acids, in particular aliphatic and/or aromatic vinylsulfonic acids, for example vinylsulfonic acid, allylsulfonic acid, styrenesulfonic acid, acrylic and methacrylic sulfonic acids, in particular sulfoethyl acrylate, sulfoethyl methacrylate, sulfopropyl acrylate, sulfopropyl methacrylate, 2-hydroxy-3-methacryloxypropylsulfonic acid and 2-acrylamido-2-methylpropanesulfonic acid (AMPS), and the water-soluble salts thereof, particularly the alkali metal salts thereof, alkaline earth metal salts thereof, and ammonium salts thereof;
■ olefinically unsaturated phosphonic acids, in particular, for example, vinyl- and allyl-phosphonic acid and the water-soluble salts thereof, particularly the alkali metal salts thereof, alkaline earth metal salts thereof, and ammonium salts thereof;
■ sulfomethylated and/or phosphonomethylated acrylamides and the water-soluble salts thereof, particularly the alkali metal salts thereof, alkaline earth metal salts thereof, and ammonium salts thereof.

Preferably, olefinically unsaturated carboxylic acids and carboxylic acid anhydrides, in particular acrylic acid, methacrylic acid, itaconic acid, crotonic acid, glutaconic acid, maleic acid, maleic anhydride, fumaric acid, and the water-soluble alkali metal salts thereof, alkaline earth metal salts thereof, and ammonium salts thereof are employed, the water-soluble alkali metal salts of acrylic acid, in particular its sodium and potassium salts and its ammonium salts, being particularly preferred.

In a preferred embodiment, the anionic polymeric dispersant is derived from water-soluble alkali metal salts of acrylic acid, polypotassium acrylates being particularly preferred according to the invention.

Preferably, the aforementioned anionic monomers comprise 6 to 25 carbon atoms, more preferably 7 to 20 carbon atoms, most preferably 7 to 15 carbon atoms and in particular 8 to 12 carbon atoms.

Preferably, the anionic polymeric dispersant is derived from
- 30 to 100 wt.-%, more preferably 50 to 100 wt.-%, still more preferably 70 to 100 wt.-% of (meth)acrylic acid, vinyl sulfonic acid, 2-acrylamido-2-methylpropanesulfonic acid (AMPS) or the respective salts thereof, and
- 0 to 70 wt.-%, more preferably 0 to 50 wt.-%, still more preferably 0 to 30 wt.-% of nonionic monomers, still more preferably non-ionic monomers according to general formula (I) 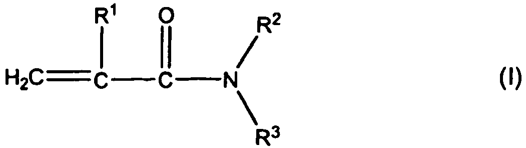 wherein
   R¹ means hydrogen or C₁-C₃-alkyl; and
   R² and R³ mean, independently of each other, hydrogen, C₁-C₅-alkyl or C₁-C₅-hydroxyalkyl,
most preferably (alk)acrylamide.

In a preferred embodiment, the anionic polymeric dispersant is derived from (meth)acrylic acid or a salt thereof, preferably the sodium, potassium or ammonium salt.

When the anionic polymeric dispersant is a copolymer, it is preferably derived from at least one anionic monomer in combination with at least one non-ionic monomer.

Suitable non-ionic monomers include non-ionic monomers according to general formula (I). Examples of non-ionic monomers according to general formula (I) include (meth)acrylamide, N-methyl (meth)acrylamide, N-isopropyl(meth)acrylamide or N,N-substituted (meth)acryl amides such as N,N-dimethyl(meth)acrylamide, N,N-diethyl(meth)acrylamide, N-methyl-N-ethyl(meth)acrylamide or N-hydroxyethyl(meth)acrylamide.

Further suitable non-ionic monomers include non-ionic amphiphilic monomers according to general formula (II) 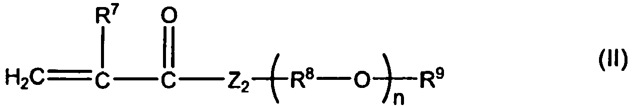 wherein
Z₂ means O, NH or NR⁶ with R⁶ being C₁-C₃-alkyl,
R⁷ means hydrogen or C₁-C₃-alkyl,
R⁸ means C₂-C₆-alkylene,
R⁹ means hydrogen, C₈-C₃₂-alkyl, C₈-C₃₂-aryl and/or C₈-C₃₂-aralkyl, and
n means an integer between 1 and 50, preferably 1 and 20.

Examples of amphiphilic monomers of general formula (II) include reaction products of (meth)acrylic acid and polyethylene glycols (10 to 50 ethylene oxide units), which are etherified with a fatty alcohol, or the corresponding reaction products with (meth)acrylamide.

In a preferred embodiment, the anionic polymeric dispersant is substantially linear, i.e. is not derived from monomer mixtures containing cross-linkers.

In another preferred embodiment, the anionic polymeric dispersant is cross-linked. Examples of suitable cross-linkers are known to the skilled person and are further described herein below.

Cross-linking may be achieved by radical reactions, i.e. in the course of the propagation of all polymer chains, i.e. of the "main backbones". For that purpose, the cross-linker preferably contains an appropriate number of ethylenically unsaturated groups that are capable of reacting in free radical chain growth reaction.

Alternatively, however, cross-linking may also be achieved by non-radical reactions, e.g. addition or condensation reactions known to the skilled artisan. For that purpose, the cross-linker preferably contains an appropriate number of functional groups that are capable of reacting with one another, optionally after addition of a reaction partner reagent. Under these circumstances, cross-linking can be initiated simultaneously with the radical polymerization of the other monomers. Preferably, however, cross-linking is initiated subsequently to the radical polymerization of the other monomers, i.e. the cross-linkers are incorporated into the non-cross-linked polymers in a first reaction step and subsequently cross-linked with one another.

In both cases the cross-linker is preferably incorporated into the polymer backbone first. Thus, the cross-linker preferably contains at least a single ethylenically unsaturated functional group so that it is capable of reacting with the other monomers in a free radical polymerization reaction.

Preferably, the cross-linked anionic polymeric dispersant is derived from a monomer composition containing 0.0001 to 1.25 wt.-% of one or more ethylenically unsaturated cross-linkers, preferably 0.0001 to 1.0 wt.-%, more preferably 0.0001 to 0.5 wt.-%, still more preferably 0.0001 to 0.3 wt.-%, yet more preferably 0.0001 to 0.1 wt.-%, most preferably and in particular 0.0001 to 0.05 wt.-%, based on the total weight of monomers.

The aqueous reaction mixture may contain additional water-soluble dispersant components in combination with the anionic polymeric dispersant. Under these circumstances, the weight ratio of the anionic polymeric dispersant to said additional water-soluble dispersant components is preferably within the range of from 1 : 0.01 to 1 : 0.5, preferably 1 : 0.01 to 1 : 0.3. By way of example, cellulose derivatives, polyvinyl acetates, starch, starch derivatives, dextrans, polyvinylpyrrolidones, polyvinylpyridines, polyethyleneimines, polyamines, polyvinylimidazoles, polyvinylsuccinimides, polyvinyl-2-methylsuccinimides, polyvinyl-1,3-oxazolidin-2-ones, polyvinyl-2-methylimidazolines and/or the respective copolymers thereof with maleic acid, maleic anhydride, fumaric acid, itaconic acid, itaconic anhydride, (meth)acrylic acid, salts of (meth)acrylic acid and/or (meth)acrylamide compounds may be mentioned as additional water-soluble dispersant components.

Besides the anionic polymeric dispersant, the aqueous reaction mixture comprises a monomer composition. The monomer composition in turn comprises
a) at least 20 wt.-% of a non-ionic monomer according to general formula (I);
b) at least 20 wt.-% of a radically polymerizable anionic monomer;
c) 0.0001 to 1.25 wt.-% of one or more preferably ethylenically unsaturated cross-linkers;
d) optionally, up to 1.25 wt.-% of one or more hydrophobic (meth)acrylic acid C₄₋₁₈-alkyl esters; and
e) optionally, further ethylenically unsaturated monomers;
all percentages being based on the total molar amount of monomers.

In this regard the sum of the values in wt.-% needs not to amount to 100 wt.-%, since further ethylenically unsaturated monomers e) may be contained in the monomer composition, i.e. in the aqueous reaction mixture, which have to be taken into account when determining the total amount of monomers. Preferably, however, monomer composition consists of monomers a), b) and c) so that the sum of the three values in wt.-% amounts to 100 wt.-%, i.e. no further monomers are present.

The monomer composition contains at least 20 wt.-%, preferably at least 25 wt.-%, more preferably at least 30 wt.-%, still more preferably at least 35 wt.-%, yet more preferably at least 40 wt.-%, most preferably at least 45 wt.-% and in particular at least 50 wt.-% of a nonionic monomer according to general formula (I), based on the total molar amount of all monomers.

In a preferred embodiment, the monomer composition contains 53 to 80 wt.-%, preferably 67±12 wt.-%, more preferably 67±11 wt.-%, still more preferably 67±10 wt.-%, yet more preferably 67±9 wt.-%, most preferably 67±8 wt.-% and in particular 67±7 wt.-% of a nonionic monomer according to general formula (I), based on the total molar amount of all monomers.

In another preferred embodiment, the monomer composition contains 20 to 49.5 wt.-%, preferably 34±12 wt.-%, more preferably 34±11 wt.-%, still more preferably 34±10 wt.-%, yet more preferably 34±9 wt.-%, most preferably 34±8 wt.-% and in particular 34±7 wt.-% of a non-ionic monomer according to general formula (I), based on the total molar amount of all monomers.

Preferably, the non-ionic ethylenically unsaturated monomer according to formula (I) is water-soluble. Preferably, the non-ionic monomer according to formula (I) is selected from the group consisting of (meth)acrylamide, N-methyl(meth)acrylamide, N-isopropyl(meth)-acrylamide, N,N-dimethyl(meth)acrylamide, N,N-diethyl(meth)acrylamide, N-methyl-N-ethyl(meth)acrylamide and N-hydroxyethyl(meth)acrylamide. Acrylamide is particularly preferred.

The monomer composition further contains at least 20 wt.-%, preferably at least 25 wt.-%, more preferably at least 30 wt.-%, still more preferably at least 35 wt.-%, yet more preferably at least 40 wt.-%, most preferably at least 45 wt.-% and in particular at least 50 wt.-% of a radically polymerizable anionic monomer, as defined supra, based on the total molar amount of all monomers.

In a preferred embodiment, the monomer composition contains 20 to 47 wt.-%, preferably 33±12 wt.-%, more preferably 33±11 wt.-%, still more preferably 33±10 wt.-%, yet more preferably 33±9 wt.-%, most preferably 33±8 wt.-% and in particular 33±7 wt.-% of a radically polymerizable anionic monomer, based on the total molar amount of all monomers.

In another preferred embodiment, the monomer composition contains 50.5 to 80 wt.-%, preferably 66±12 wt.-%, more preferably 66±11 wt.-%, still more preferably 66±10 wt.-%, yet more preferably 66±9 wt.-%, most preferably 66±8 wt.-% and in particular 66±7 wt.-% of a radically polymerizable anionic monomer, based on the total molar amount of all monomers.

Preferably, the radically polymerizable anionic monomer is water-soluble.

Preferably, the radically polymerizable anionic monomer is selected from the group consisting of
■ olefinically unsaturated carboxylic acids and carboxylic acid anhydrides, in particular acrylic acid, methacrylic acid, itaconic acid, crotonic acid, glutaconic acid, maleic acid and maleic anhydride, fumaric acid and the water-soluble salts thereof, particularly the alkali metal salts thereof, alkaline earth metal salts thereof, and ammonium salts thereof;
■ olefinically unsaturated sulfonic acids, in particular aliphatic and/or aromatic vinylsulfonic acids, for example vinylsulfonic acid, allylsulfonic acid, styrenesulfonic acid, acrylic and methacrylic sulfonic acids, in particular sulfoethyl acrylate, sulfoethyl methacrylate, sulfopropyl acrylate, sulfopropyl methacrylate, 2-hydroxy-3-methacryloxypropylsulfonic acid and 2-acrylamido-2-methylpropanesulfonic acid (AMPS), and the water-soluble salts thereof, particularly the alkali metal salts thereof, alkaline earth metal salts thereof, and ammonium salts thereof;
■ olefinically unsaturated phosphonic acids, in particular, for example, vinyl- and allyl-phosphonic acid and the water-soluble salts thereof, particularly the alkali metal salts thereof, alkaline earth metal salts thereof, and ammonium salts thereof;
■ sulfomethylated and/or phosphonomethylated acrylamides and the water-soluble salts thereof, particularly the alkali metal salts thereof, alkaline earth metal salts thereof, and ammonium salts thereof.

Preferably, olefinically unsaturated carboxylic acids and carboxylic acid anhydrides, in particular acrylic acid, methacrylic acid, itaconic acid, crotonic acid, glutaconic acid, maleic acid, maleic anhydride, fumaric acid, and the water-soluble alkali metal salts thereof, alkaline earth metal salts thereof, and ammonium salts thereof are employed as radically polymerizable anionic monomers, the water-soluble alkali metal salts of acrylic acid, in particular its sodium and potassium salts and its ammonium salts, being particularly preferred.

Preferably, the radical reactivity ratios of the radically polymerizable anionic monomer r₁ and of the non-ionic monomer according to general formula (I) r₂ are each within the range of from 0.01 to 100, more preferably 0.02 to 50, still more preferably 0.05 to 20, most preferably 0.1 to 10 and in particular 0.2 to 5. In this context, r₁ is defined as the ratio of two propagation constants involving a radical of the anionic monomer: The ratio always compares the propagation constant for the monomer of the same type adding to the radical (k₁₁) relative to the propagation constant for the addition of the comonomer (k₁₂), i.e., r₁ = k₁₁/k₁₂. In analogy, r₂ = k₂₂/k₂₁. For further details it can be referred e.g. to Paul C. Hiemenz, Polymer Chemistry, Marcel Dekker New York, 1984, Chapter 7.2.

When the anionic polymeric dispersant is also derived from an anionic monomer, said anionic monomer may be different from or identical with the radically polymerizable anionic monomer contained in the monomer composition, i.e. in the aqueous reaction mixture. Preferably, both monomers differ from one another so that the repetition units of the cross-linked anionic copolymer differ from the repetition units of the anionic polymeric dispersant. Thus, the anionic polymeric dispersant and the cross-linked anionic copolymer preferably differ from each other, said difference possibly involving physical variables such as different molecular weight and/or chemical structure, as well as different monomer composition.

The monomer composition further contains 0.0001 to 1.25 wt.-% of one or more preferably ethylenically unsaturated cross-linkers, based on the total weight of monomers.

Cross-linkers are known to the skilled artisan. Some aspects have already been described above in connection with the cross-linked anionic polymeric dispersant. These aspects shall also apply to the cross-linkers of the cross-linked anionic copolymer and *vice versa.*

According to the invention, the cross-linker contains ethylenically unsaturated groups that are radically polymerizable. Preferably, the ethylenically unsaturated cross-linker contains 2, 3, 4 or 5 ethylenically unsaturated groups.

Examples of cross-linkers with two radically polymerizable ethylenically unsaturated groups include:
(1) Alkenyl di(meth)acrylates, such as 1,6-hexanediol di(meth)acrylate, 1,10-decanediol di(meth)acrylate, 1,12-dodecanediol di(meth)acrylate, 1,18-octadecanediol di(meth)acrylate, neopentyl glycol di(meth)acrylate, methylene di(meth)acrylate, 2,2'-bis(hydroxymethyl)-1,3-propanediol di(meth)acrylate, and preferably, ethylene glycol di(meth)acrylate, 1,3-propane-diol di(meth)acrylate, 1,3-butanediol di(meth)acrylate, and 1,4-butanediol di(meth)acrylate;
(2) Alkylene di(meth)acrylamides, e.g. N-methylene di(meth)acrylamide, N,N'-3-methyl-butylidene bis(meth)acrylamide, N,N'-(1,2-dihydroxyethylene) bis(meth)acrylamide, and preferably N,N'-hexamethylene bis(meth)acrylamide, and particularly preferably N,N'-methylene bis(meth)acrylamide;
(3) Polyalkoxydi(meth)acrylates according to general formula (III) 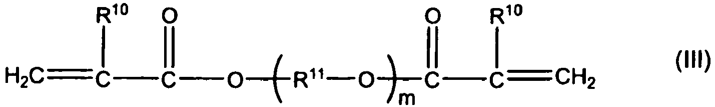 where
   R¹⁰ is hydrogen or methyl;
   R¹¹ is selected from -CH₂CH₂-, -CH₂CH₂CH₂-, -CH₂CH₂CH₂CH₂-, -CH₂CH₂CH₂CH₂CH₂- or -CH₂CH₂CH₂CH₂CH₂CH₂-; and
   m is an integer in the range 2-50.

   Examples of cross-linkers according to general formula (III) include polypropylene glycol di(meth)acrylates with m in the range 4-25; polybutylene glycol di(meth)acrylates with m in the range 5-40; and, preferably, polyethylene glycol di(meth)acrylates with m in the range 2-45, e.g. diethylene glycol di(meth)acrylate, triethylene glycol di(meth)acrylate, tetraethylene glycol di(meth)acrylate; and, more preferably, polyethylene glycol di(meth)acrylates with m in the range 5-20;
(4) Examples of additional di(meth)acrylates which may be used include benzylidene di-(meth)acrylate, bisphenol-A di(meth)acrylate, 1,3-di(meth)acrytoyloxy-2-propanol, hydroquinone di(meth)acrylate, ethanedithiol di(meth)acrylate, propanedithiol di(meth)acrylate, polyethylene dithiol di(meth)acrylate, and polypropylene dithiol di(meth)acrylate;
(5) Divinyl compounds, for example, 1,4-butanediol divinyl ether, divinylbenzene, butadiene, 1,6-hexadiene; di(meth)allyl compounds, such as, for example, di(meth)allyl phthalate or di(meth)allyl succinate; vinyl (meth)acrylic compounds, for example, vinyl (meth)acrylate; or preferably (meth)allyl (meth)acrylic compounds, for example, allyl (meth)acrylate.

Examples of cross-linkers having 3 or more ethylenically unsaturated radically polymerizable groups include glycerin tri(meth)acrylate, 2,2-dihydroxymethyl-1-butanol tri(meth)acrylate, trimethylolpropane triethoxy tri(meth)acrylate, trimethacrylamide, (meth)allylidene di(meth)-acrylate, 3-allyloxy-1,2-propanediol di(meth)acrylate, triallyl amine, triallyl cyanurate or triallyl isocyanurate; and also (as representative compounds with more than 3 ethylenically unsaturated radically polymerizable groups) pentaerythritol tetra(meth)acrylate and N,N,N'N'-tetra(meth)acryloyl-1,5-pentanediamine.

An example of a cross-linker having 5 ethylenically unsaturated radically polymerizable groups is dipentaerithritol-pentaacrylate.

Particularly preferred cross-linkers are selected from the group constsiting of methylene bisacrylamide, polyethylene glycol diacrylate and triallylamine.

Further preferred cross-linkers include asymmetrically cross-linkable monomers, i.e. cross-linkable monomers which rely on different functional groups with respect to the incorporation reaction into the polymer backbone and the cross-linking reaction. Examples of such asymmetrically cross-linkable monomers include N'-methylol acrylamide, N'-methylol methacrylamide and glycidyl(meth)acrylate.

Cross-linkers of this type have the advantage that cross-linking may be initiated subsequently. Thus, cross-linking may be performed under different conditions than the radical polymerization of the main-backbone. Preferably, cross-linking is initiated after changing the reaction conditions, e.g. the pH value (addition of acid or base), the temperature, and the like.

In a preferred embodiment, cross-linking is performed in an after-reaction at a temperature that is up to about 40 °C higher than the temperature of the previous radical polymerization reaction. Cross-linking may last 0.1 to 10 hours. Typically, cross-linking is performed for 0.5 to 3 hours at a temperature that is 5 to 15 °C higher than the temperature of the previous radical polymerization reaction.

Preferably, the asymmetrically cross-linkable monomers contain N-methylol groups. N-methylol-compounds (N-hydroxymethyl compounds) are known to the skilled artisan and can be prepared e.g. by condensation of formaldehyde with amides or amines. N-methylol groups are capable of reacting with other N-methylol groups (self cross-linking) as well as with other functional groups such as amide groups or hydroxy groups (partner cross-linking). Preferred partners are amide moieties of acrylamide.

For the purpose of the specification, the preferred quantity of the asymmetrically cross-linkable monomers as cross-linker preferably refers to the asymmetrically cross-linkable monomer as such, but does not include any non-asymmetrically cross-linkable monomer. For example, if cross-linking is achieved by reaction of a monomer containing N-methylol groups and acrylamide, the preferred quantity of the cross-linker does not encompass the quantity of the acrylamide.

Alternatively, cross-linking may be achieved by compounds that are not radically polymerizable themselves. Such compounds may for example comprise at least two N-methylol groups that are capable of reacting with amide moieties of acrylamide residues of different polymer chains thereby leading to a cross-linked polymer network. Examples include dimethylurea, trimethylolmelamine, hexamethylolmelamine or low-molecular water soluble melamine resins. Such compounds may be added prior to and/or in the course of the radical polymerization reaction, although they do not react or, merely to a minor extent. Typically, they react in the after-reaction at elevated temperature as described above.

Another example of such compound that does not react in the free radical polymerization but is capable of cross-linking the thus obtained polymer is glyoxal which is typically hydrated in aqueous solution. The cross-linking reaction based on glyoxal is illustrated here below:

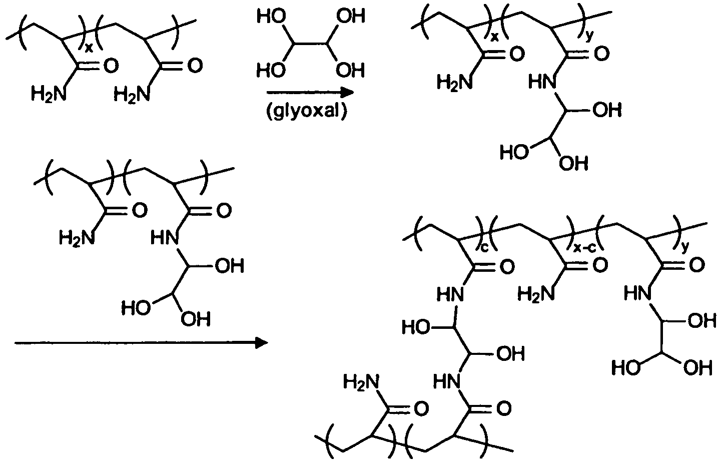

The monomer composition contains 0.0001 to 1.25 wt.-% of one or more preferably ethylenically unsaturated cross-linkers, preferably 0.0001 to 1.0 wt.-%, more preferably 0.0001 to 0.5 wt.-%, still more preferably 0.0001 to 0.3 wt.-%, yet more preferably 0.0001 to 0.1 wt.-%, most preferably and in particular 0.0001 to 0.05 wt.-%, based on the total weight of monomers.

In a preferred embodiment, the monomer composition contains 2.5±2.0 ppm of one or more preferably ethylenically unsaturated cross-linkers, more preferably 2.5±1.5 ppm, most preferably 2.5±1.0 ppm, and in particular 2.5±0.5 ppm, based on the total weight of monomers. In another preferred embodiment, the monomer composition contains 5.0±4.0 ppm of one or more preferably ethylenically unsaturated cross-linkers, more preferably 5.0±3.0 ppm, still more preferably 5.0±2.0 ppm, yet more preferably 5.0±1.5 ppm, most preferably 5.0±1.0 ppm, and in particular 5.0±0.5 ppm, based on the total weight of monomers. In still another preferred embodiment, the monomer composition contains 7.5±4.0 ppm of one or more preferably ethylenically unsaturated cross-linkers, more preferably 7.5±3.0 ppm, still more preferably 7.5±2.0 ppm, yet more preferably 7.5±1.5 ppm, most preferably 7.5±1.0 ppm, and in particular 7.5±0.5 ppm, based on the total weight of monomers.

A skilled person realizes that when the cross-linker is asymmetric, i.e., bears a radically polymerizable group such as an ethylenically unsaturated group capable of incorporating the cross-linker into the polymer backbone in the course of free radical polymerization reaction, and non-polymerizable groups capable of undergoing cross-linking with one another, optionally mediated by a suitable reaction partner, the method according to the invention may comprise two reaction steps, namely i) a free radical polymerization and ii) a cross-linking reaction (after-reaction). Step ii) may require the addition of the suitable reaction partner. Further, steps i) and ii) may require different reaction conditions (e.g. temperature).

Further, a skilled person realizes that the total amount of cross-linker does not necessarily have to be present from the very beginning of the polymerization reaction. It may also be added in the course of the polymerization reaction. If the cross-linker itself does not bear any radically polymerizable groups, i.e. if cross-linking is based on another chemistry such as the above glyoxal linkage, the entire amount of the cross-linker may even be added subsequently to the radical polymerization reaction. In this regard, the content of 0.0001 to 1.25 wt.-% of one or more cross-linkers to the aqueous reaction mixture which is subjected to a free radical polymerization reaction may also be added after the free radical polymerization reaction, provided that a suitable after-reaction takes place such that the thus resulting water-in-water polymer dispersion contains a cross-linked cationic polymer.

Therefore, the present invention also relates to a method for manufacturing a water-in-water polymer dispersion which comprises the steps
A) subjecting an aqueous reaction mixture comprising
   (i) an anionic polymeric dispersant and
   (ii) a monomer composition comprising
      a) at least 5 wt.-%, preferably at least 20 wt.-% of a non-ionic monomer according to general formula (I) 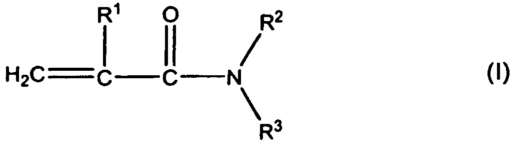 wherein
         R¹ means hydrogen or C₁-C₃-alkyl; and
         R² and R³ mean, independently of each other, hydrogen, C₁-C₅-alkyl or C₁-C₅-hydroxyalkyl;
         based on the total weight of monomers;
      b) at least 5 wt.-% of a radically polymerizable anionic monomer;
      c) 0 to 1.25 wt.-% of one or more hydrophobic (meth)acrylic acid C₄₋₁₈-alkyl esters, based on the total weight of monomers; and
      d) optionally, further ethylenically unsaturated monomers;
   to a free radical polymerization reaction such that an anionic prepolymer is obtained;
B) adding 0.0001 to 1.25 wt.-% of one or more preferably ethylenically unsaturated cross-linkers, based on the total weight of monomers employed in step A) to the thus obtained prepolymer; and
C) subjecting the prepolymer to a cross-linking reaction (after-reaction);
such that the resulting water-in-water polymer dispersion contains a cross-linked anionic copolymer.

In this regard, the term "nomomer composition" shall also include compositions comprising the prepolymers and the cross-linker prior to effecting the cross-linking reaction.

The monomer composition contains optionally, up to 1.25 wt.-% of one or more hydrophobic (meth)acrylic acid C₄₋₁₈-alkyl esters, based on the total weight of monomers. Preferably, however, the monomer composition does not contain any hydrophobic (meth)acrylic acid C₄₁₈-alkyl esters, such as butyl acrylate, butyl methacrylate, lauryl acrylate, lauryl methacrylate, and the like.

Preferably, the monomer composition does not contain any hydrophobic monomers. In this regard, hydrophobic monomers are preferably defined as monomers that are not water soluble. Thus, the monomer composition preferably does not contain any monomers having a solubility in pure water at ambient temperature of below 10 g l⁻¹, more preferably below 25 g l⁻¹, still more preferably below 50 g l⁻¹, yet more preferably below 100 g l⁻¹, most preferably below 250 g l⁻¹ and in particular below 500 g l⁻¹.

Preferably, the monomer composition does not contain any hydrophobic monomers according to general formula (IV) 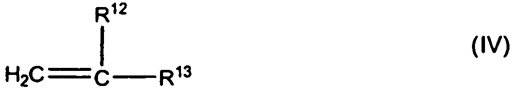 where
R¹² is hydrogen or C₁₋₅-alkyl; and
R¹³ is alkyl, cycloalkyl, aryl or aralkyl each having 1 to 20 carbon atoms; or -C(=O)-Z₀-R¹⁴ wherein Z₀ is O, NH or NR¹⁴ with R¹⁴ being alkyl, cycloalkyl, aryl or aralkyl each having 1 to 20 carbon atoms.

The monomer composition may optionally contain further ethylenically unsaturated polymers that are radically polymerizable. Preferably, however, the monomer composition does not contain such monomers, i.e. preferably consists of components a), b), c) and optionally d), particularly preferably consists of components a), b) and c).

In a preferred embodiment of the aqueous reaction mixture according to the invention,
- the anionic polymeric dispersant is an anionic polymer derived from at least one monomer selected from
   ■ olefinically unsaturated carboxylic acids and carboxylic acid anhydrides, in particular acrylic acid, methacrylic acid, itaconic acid, crotonic acid, glutaconic acid, maleic acid and maleic anhydride, fumaric acid and the water-soluble salts thereof, particularly the alkali metal salts thereof, alkaline earth metal salts thereof, and ammonium salts thereof;
   ■ olefinically unsaturated sulfonic acids, in particular aliphatic and/or aromatic vinylsulfonic acids, for example vinylsulfonic acid, allylsulfonic acid, styrenesulfonic acid, acrylic and methacrylic sulfonic acids, in particular sulfoethyl acrylate, sulfoethyl methacrylate, sulfopropyl acrylate, sulfopropyl methacrylate, 2-hydroxy-3-methacryloxypropylsulfonic acid and 2-acrylamido-2-methylpropanesulfonic acid (AMPS), and the water-soluble salts thereof, particularly the alkali metal salts thereof, alkaline earth metal salts thereof, and ammonium salts thereof;
   ■ olefinically unsaturated phosphonic acids, in particular, for example, vinyl- and allyl-phosphonic acid and the water-soluble salts thereof, particularly the alkali metal salts thereof, alkaline earth metal salts thereof, and ammonium salts thereof;
   ■ sulfomethylated and/or phosphonomethylated acrylamides and the water-soluble salts thereof, particularly the alkali metal salts thereof, alkaline earth metal salts thereof, and ammonium salts thereof; and/or
- the radically polymerizable anionic monomer is selected from the group consisting of
   ■ olefinically unsaturated carboxylic acids and carboxylic acid anhydrides, in particular acrylic acid, methacrylic acid, itaconic acid, crotonic acid, glutaconic acid, maleic acid and maleic anhydride, fumaric acid and the water-soluble salts thereof, particularly the alkali metal salts thereof, alkaline earth metal salts thereof, and ammonium salts thereof;
   ■ olefinically unsaturated sulfonic acids, in particular aliphatic and/or aromatic vinylsulfonic acids, for example vinylsulfonic acid, allylsulfonic acid, styrenesulfonic acid, acrylic and methacrylic sulfonic acids, in particular sulfoethyl acrylate, sulfoethyl methacrylate, sulfopropyl acrylate, sulfopropyl methacrylate, 2-hydroxy-3-methacryloxypropylsulfonic acid and 2-acrylamido-2-methylpropanesulfonic acid (AMPS), and the water-soluble salts thereof, particularly the alkali metal salts thereof, alkaline earth metal salts thereof, and ammonium salts thereof;
   ■ olefinically unsaturated phosphonic acids, in particular, for example, vinyl- and allyl-phosphonic acid and the water-soluble salts thereof, particularly the alkali metal salts thereof, alkaline earth metal salts thereof, and ammonium salts thereof;
   ■ sulfomethylated and/or phosphonomethylated acrylamides and the water-soluble salts thereof, particularly the alkali metal salts thereof, alkaline earth metal salts thereof, and ammonium salts thereof; and/or
- the non-ionic monomer according to general formula (I) is (meth)acrylamide.

The method according to the invention includes the step of subjecting an aqueous reaction mixture to a free radical polymerization reaction. Usually, before the free radical polymerization reaction is initiated, the aqueous reaction mixture is prepared from its components (i) and (ii), i.e. from the anionic polymeric dispersant and the monomer composition.

The preparation of aqueous reaction mixtures is known to the skilled person. The components may be added simultaneously or consecutively. The components may be added by conventional means, e.g. by pouring or dropping liquids, by dosing powders, and the like.

In principle, it is not necessary that the entire amount of each component is initially present when the aqueous reaction mixture is prepared. Alternatively, partial dispersion of the monomers can be effected at the beginning of the polymerization, the remainder of the monomers being added as metered portions or as a continuous feed distributed over the entire course of polymerization. For example, only a certain portion of a particular component, e.g., only 70 wt.-% of the radically polymerizable anionic monomer, may be initially employed, and thereafter, possibly in the course of the polymerization reaction, the remainder of said particular component, e.g., the residual 30 wt.-% of the radically polymerizable anionic monomer, is employed.

In a preferred embodiment of the method according to the invention, before the aqueous reaction mixture is subjected to a radical polymerization, a water-soluble salt is added in quantities of 0.1 to 5.0 wt.-%, based on the total weight of the aqueous reaction mixture.

Ammonium, alkali metal and/or alkaline earth metal salts, preferably ammonium, sodium, potassium, calcium and/or magnesium salts, can be used as water-soluble salts. Such salts can be salts of an inorganic acid or of an organic acid, preferably of an organic carboxylic acid, sulfonic acid, phosphonic acid, or of a mineral acid. The water-soluble salts are preferably salts of an aliphatic or aromatic mono-, di-, polycarboxylic acid, of a hydroxycarboxylic acid, preferably of acetic acid, propionic acid, citric acid, oxalic acid, succinic acid, malonic acid, adipic acid, fumaric acid, maleic acid or benzoic acid, or sulfuric acid, hydrochloric acid or phosphoric acid. Very particularly preferably, sodium chloride, ammonium sulfate and/or sodium sulfate are used as water-soluble salts.

The salts can be added before, during or after polymerization, polymerization preferably being carried out in the presence of a water-soluble salt.

After the aqueous reaction mixture has been prepared, it is subjected to a free radical polymerization reaction, i.e., polymerization of the monomer composition comprising the radically polymerizable anionic monomer, the non-ionic monomer according to general formula (I), and the cross-linker and the optionally present further monomers in the presence of the anionic polymeric dispersant is initiated, thereby yielding the cross-linked anionic copolymer dispersed in the water-in-water polymer dispersion.

The skilled person knows how to radically polymerize monomers in an aqueous reaction mixture. Typically, the polymerization reaction is carried out in the presence of one ore more conventional polymerization initiators.

Radicals may be formed, e.g., upon thermally induced or photochemically induced homolysis of single bonds or redox reactions.

Examples of suitable water-soluble initiators include, e.g., 2,2'-azobis-(2-amidinopropane) dihydrochloride, 4,4'-azobis-(4-cyanopentanoic acid), 2,2'-azobis(2-(-imidazolin-2-yl)propane dihydrochloride or redox systems such as ammonium persulfate/ferric sulfate. Oil-soluble initiators include, e.g., dibenzoyl peroxide, dilauryl peroxide or tert-butyl peroxide, or azo compounds such as 2,2'-azobisisobutyronitrile, dimethyl 2,2'-azobisisobutyrate and 2,2'-azobis-(4-methoxy-2,4-dimethylvaleronitrile). The initiators may be used either individually or in combinations and generally in an amount of about 0.015 to 0.5% by weight of the total weight of the aqueous reaction mixture. The skilled person principally knows how to modify the amount and type of the initiator in order to modify the properties of the resultant polymer product, e.g., its average molecular weight.

Preferably, azo compounds such as 2,2'-azobisisobutyronitrile, 2,2'-azobis(2-(-imidazolin-2-yl)propane dihydrochloride, 2,2'-azobis(2-aminopropane) dihydrochloride or preferably potassium persulfate, ammonium persulfate, hydrogen peroxide, optionally in combination with a reducing agent, e.g. an amine or sodium sulfite, are used as radical initiators. The amount of initiator, relative to the monomers to be polymerized, generally ranges from 10⁻³ to 1.0 wt.-%, preferably from 10⁻² to 0.1 wt.-%. The initiators can be added completely or also only in part at the beginning of the polymerization, with subsequent apportioning of the residual amount over the entire course of polymerization. In a preferred embodiment, the polymerization is initiated by means of a sodiumperoxodisulfate and, after reaching the maximum temperature, continued with an azo initiator, such as 2,2'-azobis(2-(-imidazolin-2-yl)propane dihydrochloride. At the end of the polymerization, a redox initiator system is preferably added in order to reduce the content of residual monomers.

In another advantageous embodiment, once the exothermic polymerization reaction is complete, i.e. generally after the temperature maximum, the content of residual monomers is further reduced by subsequent addition of redox initiator.

In another advantageous embodiment of the method according to the invention, the aqueous reaction mixture and the anionic polymeric dispersant is apportioned into the polymerization reactor during polymerization. In general, a portion, e.g. 10 to 20% of the monomers and the anionic polymeric dispersant, is initially introduced. Following initiation of polymerization, the above-mentioned apportioning is effected, optionally accompanied by further apportioning of polymerization initiator.

In addition, it is also possible to remove water during polymerization and optionally to add further anionic polymeric dispersant.

The polymerization temperature generally is 0 to 120 °C, preferably 30 to 90 °C. The polymerization temperature can be selected based on the decomposition kinetics of the initiator used.

Polymerization times are the same as those conventionally used in the art, generally 1.5 to 18 hours and preferably 2 to 6 hours, although as little as one-half hour could be used. However, attempting more rapid polymerization over a shorter period of time creates problems with removing heat. In this regard it is greatly preferred that the polymerization medium be stirred well or otherwise agitated during the polymerization.

The equipment utilized for the polymerization can simply be standard reactors such as used for oil-in-water or water-in-oil or water-in-water polymerizations.

Polymerization conversion or the end of polymerization can easily be detected by determining the content of residual monomers. Methods for this purpose are familiar to those skilled in the art (e.g. HPLC).

The polymerization is preferably carried out in such a way that the system is purged with an inert gas and polymerized under an inert gas atmosphere, e.g. under a nitrogen atmosphere.

Following polymerization, it can be advantageous to cool down the aqueous reaction mixture before optionally adding further additives, such as salts or acids, to the dispersion, preferably with stirring.

To reduce the residual monomer content, it is also possible to increase the temperature during the course of the polymerization. Alternatively, it is also possible to use additional initiators during and at the end of the polymerization and/or residual monomer destructors.

Residual monomer destructors within the meaning of the invention are substances that modify polymerizable monomers by means of a chemical reaction in such a way that they are no longer polymerizable, such that within the meaning of the invention they are no longer monomers. Substances that react with the double bond present in the monomers and/or substances that can initiate a more extensive polymerization can be used for this purpose. As residual monomer destructors that react with the double bond, reducing agents can for example be used, preferably substances from the group of acids and neutral salts of acids derived from sulfur having an oxidation number lower than VI, preferably sodium dithionite, sodium thiosulfate, sodium sulfite or sodium disulfite, and/or substances having a hydrogen sulfide group, preferably sodium hydrogen sulfide or compounds from the group of thiols, preferably mercaptoethanol, dodecyl mercaptan, thiopropionic acid or salts of thiopropionic acid or thiopropanesulphonic acid or salts of thiopropanesulphonic acid, and/or substances from the group of amines, preferably from the group of amines with low volatility, preferably diisopropanolamine or aminoethyl ethanolamine, and/or substances from the group comprising Bunte salts, formamidine sulfinic acid, sulfur dioxide, aqueous and organic solutions of sulfur dioxide or thio urea.

Preferably, the water-in-water polymer dispersion has a residual content of anionic monomers of at most 5,000 ppm, more preferably at most 2,500 ppm, still more preferably at most 1,000 ppm, yet more preferably at most 800 ppm, most preferably at most 600 ppm an in particular at most 400 ppm.

Preferably, the water-in-water polymer dispersion has a residual content of non-ionic monomers according to general formula (I) of at most 5,000 ppm, more preferably at most 2,500 ppm, still more preferably at most 1,000 ppm, yet more preferably at most 800 ppm, most preferably at most 600 ppm an in particular at most 400 ppm.

The polymerization reaction transforms the aqueous reaction mixture into a water-in-water polymer dispersion.

After the polymerization reaction, the resultant water-in-water polymer dispersion may be distillated in order to reduce the content of the solvent.

In a preferred embodiment of the method according to the invention, acid is added after polymerization in quantities of 0.1 to 5.0 wt.-%, based on the total weight of the aqueous reaction mixture. Water-soluble organic acids and/or inorganic acids can be present. More specifically, suitable organic water-soluble acids are organic carboxylic acids, sulfonic acids, phosphonic acids, preferably aliphatic or aromatic mono-, di-, polycarboxylic acids and/or hydroxycarboxylic acids, preferably acetic acid, propionic acid, citric acid, oxalic acid, succinic acid, malonic acid, adipic acid, fumaric acid, maleic acid, benzoic acid, especially preferably citric acid, adipic acid and/or benzoic acid. Suitable inorganic acids are water-soluble mineral acids, preferably hydrochloric acid, sulfuric acid, nitric acid and/or phosphoric acid. Very particularly preferred are citric acid, adipic acid, benzoic acid, hydrochloric acid, sulfuric acid and/or phosphoric acid.

Preferably, the aqueous reaction mixture contains 0.5 to 5.0 wt.-% of at least one acid and/or 0.5 to 5.0 wt.-% of at least one salt, the overall content of acid and salt preferably amounting to 5.0 wt.-%, based on the total weight of the dispersion. Preferably, when a salt as well as an acid are present, the anion of the salt differs from the chemical nature of the acid, i.e. when the acid is citric acid, the salt is no citric acid salt.

A further aspect of the invention relates to a water-in-water polymer dispersion comprising water, an anionic polymeric dispersant and a cross-linked anionic copolymer.

The water-in-water polymer dispersion comprises
(i) an anionic polymeric dispersant and
(ii) a cross-linked anionic copolymer derived from a monomer composition containing
   a) at least 5 wt.-%, preferably at least 20 wt.-% of a non-ionic monomer according to general formula (I) 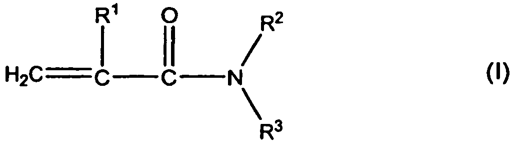 wherein
      R¹ means hydrogen or C₁-C₃-alkyl; and
      R² and R³ mean, independently of each other, hydrogen, C₁-C₅-alkyl or C₁-C₅-hydroxyalkyl;
      based on the total weight of monomers;
   b) at least 5 wt.-%, preferably at least 20 wt.-% of a radically polymerizable anionic monomer;
   c) 0.0001 to 1.25 wt.-% of one or more preferably ethylenically unsaturated cross-linkers, based on the total weight of monomers;
   d) 0 to 1.25 wt.-% of one or more hydrophobic (meth)acrylic acid C₄-₁₈-alkyl esters, based on the total weight of monomers; and
   e) optionally, further ethylenically unsaturated monomers.

Preferably, the water-in-water polymer dispersion is obtainable by the method according to the invention described above.

The water-in-water polymer dispersions according to the invention may be water-in-water polymer suspensions, water-in-water polymer emulsions, water-in-water polymer solutions or mixtures thereof.

In a preferred embodiment of the water-in-water polymer dispersion according to the invention the weight average molecular weight M_{w} of the cross-linked anionic copolymer is higher than the weight average molecular weight M_{w} of the anionic polymeric dispersant. The skilled person knows how to measure and to influence the weight average molecular weight of the cross-linked anionic copolymer, e.g. by modifying the initiator concentration, the addition of chain-transfer agents, and the like. Preferably, the weight average molecular weight is determined by gelpermeation chromatography (GPC), preferably using 1.5% formic acid as eluent versus pullulan standards, or rheological measurements.

Preferably, the cross-linked anionic copolymer exhibits a degree of polymerization of at least 90%, more preferably at least 95%, still more preferably at least 99%, yet more preferably at least 99.9%, most preferably at least 99.95% and in particular at least 99.99%.

Preferably, the weight average molecular weight of the cross-linked anionic copolymer is at least 1,000,000 g mol⁻¹, more preferably at least 1,250,000 g mol⁻¹, still more preferably at least 1,500,000 g mol⁻¹, yet more preferably at least 1,750,000 g mol⁻¹, most preferably at least 2,000,000 g mol⁻¹ and in particular at least 2,500,000 g mol⁻¹.

Preferably, the molecular weight dispersity M_{w}/Mₙ of the cross-linked anionic copolymer is within the range of from 1.0 to 4.0, more preferably 1.5 to 3.5 and in particular 1.8 to 3.2. In a preferred embodiment, M_{w}/Mₙ is within the range of from 2.7±0.7, more preferably 2.7±0.5, still more preferably 2.7±0.4, yet more preferably 2.7±0.3, most preferably 2.7±0.2 and in particular 2.7±0.1.

Preferably, the content of the cross-linked anionic copolymer is within the range of from 0.1 to 90 wt.-%, more preferably 1.0 to 80 wt.-%, still more preferably 2.5 to 70 wt.-%, yet more preferably 5.0 to 60 wt.-%, most preferably 10 to 40 wt.-% and in particular 15 to 25 wt.-%, based on the total weight of the water-in-water polymer dispersion.

Preferably, the overall polymer content, i.e. the content of cross-linked anionic copolymer and polymeric dispersant, is within the range of 40±20 wt.-%, more preferably 40±15 wt.-%, still more preferably 40±15 wt.-%, and most preferably 40±5 wt.-%, based on the total weight of the dispersion. In a preferred embodiment, the overall polymer content is at least 36 wt.-%, more preferably at least 37 wt.-%, still more preferably at least 38 wt.-%, most preferably at least 39 wt.-%, most preferably at least 40 wt.-% and in particular within the range of from 40 to 45 wt.-%.

In a preferred embodiment, the relative weight ratio of the cross-linked anionic copolymer to the anionic polymeric dispersant is within the range of from 10:1 to 0.1:1, more preferably 9:1 to 0.25:1, still more preferably 8:1 to 0.5:1, yet more preferably 7:1 to 1:1, most preferably 6:1 to 2:1 and in particular 5:1 to 3:1. In another preferred embodiment, the relative weight ratio of the cross-linked anionic copolymer to the anionic polymeric dispersant is within the range of from 9:1 to 0.05:1, more preferably 7:1 to 0.1:1, still more preferably 5:1 to 0.3:1, yet more preferably 3:1 to 0.5:1, most preferably 2:1 to 1:1 and in particular 1.5:1 to 1.2:1. Preferably, the relative weight ratio of cross-linked anionic copolymer: anionic polymeric dispersant is > 1:1.

Preferably, the weight average molecular weight M_{w} of the polymer mixture present in the water-in-water polymer dispersion, comprising the cross-linked anionic copolymer and the anionic polymeric dispersant, is in a range above 1.5 10⁶ g/mol, as measured according to the GPC method.

Preferably, the water-in-water polymer dispersion according to the invention has
- a solution viscosity (according to Brookfield) within the range of from 500 to 5,000 mPas, more preferably 800 to 3,000 mPas, still more preferably 1,000 to 2,500 mPas, most preferably 1,200 to 2,000 mPas and in particular 1,400 to 1,800 mPas; and/or
- a product viscosity within the range of from 1,000 to 50,000 mPas, more preferably 5,000 to 30,000 mPas, still more preferably 8,000 to 25,000 mPas, most preferably 10,000 to 20,000 mPas and in particular 12,000 to 19,000 mPas; and/or
- a salt viscosity within the range of from 300 to 1,000 mPas, more preferably 350 to 900 mPas, still more preferably 400 to 850 mPas, most preferably 450 to 800 mPas and in particular 500 to 750 mPas.

Preferably, the water-in-water polymer dispersion according to the invention exhibits a tan delta value at 0.005 Hz (0.00464 Hz) in 0.5 wt.-% solution at 25 °C within the range of from 4.0 to 12.0, more preferably 4.5 to 10.0, most preferably 5.0 to 9.0.

Tan delta is a measure of viscoelasticity. The value of tan delta is the ratio of the loss (viscous) modulus G" to storage (elastic) modulus G' within the system. G' and G" measurements are recorded and used to calculate tan delta (G"/G') values. On the one hand, at equivalent stress, materials with a low tan delta (<1) and higher G' value strain or deform less, thus exhibiting a stronger associated structure. These materials are mechanically stable and do not relax within the time frame or at the frequency of the measurement. Such materials are thus more elastic. On the other hand, at equivalent stress, materials with a higher tan delta value (>1) and higher G" value exhibit a viscous type of response and the stress of the sample will permit a linear polymer to relax at a low frequency. It has been surprisingly found that when varying the chain length of the hydrophobic moiety of the hydrophobic monomer according to general formula (I) (=R²), the tan delta value of the water-in-water polymer dispersion may be decreased. In other words, viscoelasticity of the system may be triggered by the chemical nature of the hydrophobic monomer.

The skilled person knows how to determine the tan delta value. Preferably, the tan delta at 0.005 Hz value is obtained using a rheometer in oscillation mode on a 0.5% by weight aqueous solution of polymer in deionized water after tumbling for two hours.

Preferably, the water-in-water polymer dispersions according to the invention are liquid. In comparison to powders and pastes, liquid dispersions are easier to dose. Powders usually require expensive dosing equipment.

The water content of the water-in-water polymer dispersion may be as it is after in situ polymerization. In a preferred embodiment, however, the water content is reduced, e.g. by vaporizing a portion of the water.

In a preferred embodiment the water content of the water-in-water polymer dispersion is within the range of 40±25 wt.-%, more preferably 40±20 wt.-%, still more preferably 40±15 wt.-%, yet more preferably 40±10 wt.-%, most preferably 40±7.5 wt.-% and in particular 40±5 wt.-%. In another preferred embodiment the water content of the water-in-water polymer dispersion is within the range of 50±25 wt.-%, more preferably 50±20 wt.-%, still more preferably 50±15 wt.-%, yet more preferably 50±10 wt.-%, most preferably 50±7.5 wt.-% and in particular 50±5 wt.-%. In still another preferred embodiment the water content of the water-in-water polymer dispersion is within the range of 60±25 wt.-%, more preferably 60±20 wt.-%, still more preferably 60±15 wt.-%, yet more preferably 60±10 wt.-%, most preferably 60±7.5 wt.-% and in particular 60±5 wt.-%. In still another preferred embodiment, the water content of the water-in-water polymer dispersion is within the range of 63±20 wt.-%, more preferably 63±15 wt.-%, still more preferably 63±10 wt.-%, yet more preferably 63±7 wt.-%, most preferably 63±5 wt.-% and in particular 63±3 wt.-%. In a particularly preferred embodiment, the water content of the water-in-water polymer dispersion is at most 80 wt.-%, more preferably at most 75 wt.-%, still more preferably at most 72 wt.-%, yet more preferably at most 70 wt.-%, most preferably at most 68 wt.-%and in particular at most 67 wt.-%.

In a preferred embodiment, the overall polymer content of the water-in-water polymer dispersions according to the invention is at least 20 wt.-%, more preferably at least 30 wt.-%, still more preferably at least 35 wt.-%, yet more preferably at least 40 wt.-%, most preferably within the range of from 45 wt.-% to 65 wt.-% and in particular from 50 wt.-% to 60 wt.-%, based on the total weight of the water-in-water polymer dispersions. In another preferred embodiment, the overall polymer content of the water-in-water polymer dispersions according to the invention is at least 10 wt.-%, more preferably at least 15 wt.-%, still more preferably at least 20 wt.-%, yet more preferably at least 25 wt.-%, most preferably within the range of from 25 wt.-% to 45 wt.-% and in particular from 30 wt.-% to 40 wt.-%, based on the total weight of the water-in-water polymer dispersions.

In a particularly preferred embodiment, the overall polymer content of the water-in-water polymer dispersions according to the invention is close to the saturation limit, i.e. close to the limiting concentration beyond which no further polymer may be dispersed (at ambient conditions and without adding further emulsifiers). Preferably, the overall polymer content of the water-in-water polymer dispersion is at least 50% of said limiting concentration, more preferably at least 60%, still more preferably at least 70%, yet more preferably at least 80%, most preferably at least 85% and in particular at least 90% of said limiting concentration. The skilled person knows how to determine the limiting concentration of a water-in-water polymer dispersion at ambient conditions.

Thus, in other words, the water content of the water-in-water polymer dispersions is preferably close to the saturation limit. The water-in-water polymer dispersions according to the invention can be commercialized as stable concentrates that are diluted prior to the individual application. The provision as concentrates reduces shipping costs and improves handling performance. It has been surprisingly found that the in situ polymerization of the monomers forming the cross-linked anionic copolymer in the presence of the anionic polymeric dispersant can be conducted at comparatively high monomer concentrations (i.e., at a comparatively low water content) and thus, a highly concentrated water-in-water polymer dispersion is obtained without requiring concentration steps, such as evaporating substantial amounts of excessive water under vacuum at elevated temperature.

Optionally, the water-in-water polymer dispersions according to the invention may contain further conventional components, e.g. in the form of water-soluble or oil-soluble acids and/or salts. The acid is preferably present in amounts of 0.1 to 3 wt.% and the salt in amounts of 0.1 to 3 wt.%, each relative to the overall dispersion, and acid and salt taken together are preferably present in amounts of 5 wt.% at most, preferably 4 wt.% at most, relative to the total weight of the dispersion.

Preferably, the water-in-water polymer dispersion according to the invention contains 0.5 to 5.0 wt.-% of at least one acid and/or 0.5 to 5.0 wt.-% of at least one salt, the overall content of acid and salt amounting to 5.0 wt.-%, based on the total weight of the dispersion.

Said further conventional components can be added before, during or after polymerization.

Preferably, the electrical conductivity of the water-in-water polymer dispersion according to the invention at 20 °C is at least 1.0 Ω⁻¹m⁻¹, more preferably at least 2.5 Ω⁻¹m⁻¹, still more preferably at least 5.0 Ω⁻¹m⁻¹, yet more preferably within the range of from 5.0 to 80 Ω⁻¹m⁻¹, most preferably within the range of from 7.5 to 70 Ω⁻¹m⁻¹, and in particular within the range of from 10 to 60 Ω⁻¹m⁻¹.

Furthermore, the water-in-water polymer dispersions according to the invention may contain water-soluble polyfunctional alcohols and/or reaction products thereof with fatty amines in amounts of up to 30 wt.%, preferably up to 15 wt.%, and more preferably up to 10 wt.%, relative to the anionic polymeric dispersant. More specifically suitable in this context are polyalkylene glycols, preferably polyethylene glycols, polypropylene glycols, block copolymers of propylene/ethylene oxides, with molecular weights of 50 to 50,000, preferably 1,500 to 30,000, low-molecular weight polyfunctional alcohols such as glycerol, ethylene glycol, propylene glycol, pentaerythritol and/or sorbitol as polyfunctional water-soluble alcohols and/or the reaction products thereof with fatty amines having C₆-C₂₂ in the alkyl or alkylene residues.

Said water-soluble polyfunctional alcohols and/or reaction products thereof with fatty amines can be added before, during or after polymerization.

The water-in-water polymer dispersions according to the invention are storage stable, i.e. no substantial sedimentation of the ingredients is observed upon storage under ambient conditions for several days. As sedimentation causes a change of the haze value of the water-in-water polymer dispersion, storage stability may be expressed in terms of a decrease of the haze value upon storage. Suitable optical methods to measure the haze value are known to the person of ordinary skill. Preferably, the haze value of the water-in-water polymer dispersion does not change more than 25%, more preferably not more than 20%, still more preferably not more than 15%, yet more preferably more than 10%, most preferably not more than 7.5% and in particular not more than 5% after storage for 28 days under ambient conditions.

Preferably, the water-in-water polymer dispersions according to the invention are acidic, i.e. have a pH value below 7.0, more preferably below 6.5, still more preferably below 6.0, yet more preferably below 5.5, most preferably below 5.0 and in particular below 4.5.

The water-in-water polymer dispersions according to the invention have several advantages over conventional water-in-water polymer dispersions, e.g.:
- cross-linked anionic copolymers having a higher molecular weight may be obtained resulting *inter alia* in improved rheological properties of the water-in-water polymer dispersions;
- product viscosities and salt resistance are extremely high - these properties are particularly desirable for enhanced oil recovery or at paper machines with closed water circuit; products having high product viscosities show a decreased tendency for layering;
- the molar ratio of ionic monomers to non-ionic monomers in the anionic polymeric dispersant and/or in the cross-linked anionic copolymer may be varied within broad limits without significantly deteriorating the essential properties of the water-in-water polymer dispersions;
- the chemistry of the anionic polymeric dispersant is substantially independent from the chemistry of the cross-linked anionic copolymer; and
- the advantageous properties of the water-in-water polymer dispersions are maintained under shear conditions.

The water-in-water polymer dispersions according to the invention are useful as additives in solid/liquid separation processes, e.g., as flocculants in the sedimentation, flotation or filtration of solids; as thickeners; or as a retention agents or drainage aid, e.g., in papermaking/retention in paper; or in sludge dewatering in sewage plants or oil-recovery. They show improved application performance, especially regarding ash retention in paper retention and dewatering, particularly under shear conditions. The water-in-water polymer dispersions obtainable according to the invention have the unexpected advantage of being excellent auxiliaries in paper making, particularly useful as retention and dewatering agents in paper making.

A further aspect of the invention relates to the use of the water-in-water polymer dispersion according to the invention as flocculant (flocculating agent), preferably in the manufacture of paper, preferably as retention aid and/or drainage aid, or as thickener or in oil-recovery, or as a contaminant control or as a dry strength aid.

In this regard, "contaminant control" preferably refers to contaminants that typically occur in paper manufacturing including pulp and papermaking operation, such as machine stock control, e.g. organic contaminant control and inorganic scale control; press section optimization , e.g. press roll contaminant control, press roll adhesion control, press fabric conditioning/cleaning or press fabric passivation; dryer section passivation, e.g. dryer cylinder contaminant control or dryer fabric contaminant control.

In this regard, "dry strength aid" preferably also refers to paper technology.

A further aspect of the invention relates to a process for the manufacture of paper, paperboard or cardboard, the process comprising the step of (ii) adding the water-in-water polymer dispersion according to the invention to an aqueous cellulosic suspension. Preferably, the process further comprises the step of (i) adding a further anionic polymeric dispersant to the cellulosic suspension, wherein step (i) is preferably performed prior to step (ii).

Preferably, the process according to the invention is performed on a paper machine having a closed water circuit. It has been surprisingly found that the high salt resistance of the water-in-water polymer dispersions according to the invention is particularly advantageous when the process water of the machine is recycled, e.g. for economical and/or ecological reasons. Thus, when the recycled water already contains a certain amount of salt, this does not immediately cause precipitation of the polymer from the water-in-water polymer dispersion. The salt capacity of the water-in-water polymer dispersion is sufficiently high so that the process water may be recycled repeatedly without significantly deteriorating the performance of the water-in-water polymer dispersion according to the invention.

Preferably, the process for the manufacture of paper comprises forming a cellulosic suspension, flocculating the suspension, optionally mechanically shearing the suspension and optionally reflocculating the suspension, draining the suspension on a screen to form a sheet and then drying the sheet, wherein the suspension is flocculated and/or re-flocculated by introducing the water-in-water polymer dispersion according to the invention.

It has surprisingly been found that the water-in-water polymer dispersions according to the invention provide improved performance in terms of improved retention, particularly under shear conditions, and yet still maintain good drainage and formation performance. The water-in-water polymer dispersions flocculate the cellulosic fibers and other components of the cellulosic paper making stock more efficiently thus inducing improvements in retention.

In the process for the manufacture of paper according to the invention the water-in-water polymer dispersion may be added to the paper making stock as the sole treatment agent in the paper making process, although preferably the water-in-water polymer dispersion may be added as part of a multi-component flocculant system in which the cellulosic suspension is flocculated and then reflocculated.

In one aspect of the invention the cellulosic suspension is flocculated by the water-in-water polymer dispersion (flocculating agent) and then the cellulosic suspension is reflocculated by a further addition of the water-in-water polymer dispersion (reflocculating agent) or alternatively, by another flocculating material (reflocculating agent). Optionally, the floccs formed are degraded before being reflocculated, by for instance applying mechanical shear. This can be for instance passing the flocculated cellulosic suspension through one or more shear stages such as a centri-screen or a fan pump etc.

In an alternative form of the invention the cellulosic suspension is flocculated by introducing a flocculating material (flocculating agent) and the cellulosic suspension is reflocculated by introducing the water-in-water polymer dispersion (reflocculating agent). Optionally the floccs are degraded before reflocculation.

The cellulosic suspension may be flocculated by introducing the flocculating agent into the suspension at any suitable addition point. This may be for instance before one of the pumping stages or prior to the centri-screen or even after the centri-screen. The cellulosic suspension may then be reflocculated at any suitable point after it has been flocculated. The flocculating agent and reflocculating agent may be added in close proximity, for example without any shear stage between the additions. Preferably, there is at least one shear stage (preferably selected from cleaning, pumping and mixing stages) separating the addition of flocculating agent and reflocculating agent. Desirably, when the flocculating agent is applied prior to a shear stage, for instance a fan pump or the centri-screen, the reflocculating agent may be added after that shear stage. This may be immediately after the shear stage or more usually further after. Thus, the flocculating agent may be added prior to a fan pump and the reflocculating agent may be added after the centri-screen.

Accordingly, the water-in-water polymer dispersion is added as the flocculating agent and/or as the reflocculating agent.

Desirably, the water-in-water polymer dispersion may be added to the stock at a dose of 5 to 5,000 ppm, more preferably 50 to 2,500 ppm, most preferably 200 to 1,500 ppm, based on solid contents.

When the water-in-water polymer dispersion is used in a paper making process as part of a multi-component flocculating system, it may be added as the flocculating agent and/or reflocculating agent. According to one preferred aspect of the invention the multi-component flocculating system comprises the water-in-water polymer dispersion and a different flocculating material. This flocculating material may be any of the group consisting of water soluble polymers, water insoluble polymeric microbeads, particulate uncooked polysaccharides and inorganic materials. Suitable flocculating materials include inorganic materials such as siliceous materials, alum, aluminium chloro hydrate and polyaluminium chloride.

When the flocculating material is a water soluble polymer, it may be any suitable water soluble polymer, for instance biopolymers, such as nonionic, cationic, anionic and amphoteric starches or other polysaccharides. The flocculating material may also be any suitable cationic, anionic, amphoteric or nonionic synthetic water soluble polymer.

The flocculating material may be a siliceous material which is in the form of an anionic microparticulate composition. The siliceous materials include silica based particles, colloidal silica, silica microgels, silica sols, silica gels, polysilicates, aluminosilicates, borosilicates, polyaluminosilicates, polyborosilicates, zeolites and clays. The clays are preferably swelling clays, for instance this may be typically a bentonite type clay. The preferred clays are swellable in water and include clays which are naturally water swellable or clays which can be modified, for instance by ion exchange to render them water swellable. Suitable water swellable clays include but are not limited to clays often referred to as hectorite, smectites, montmorillonites, nontronites, saponite, sauconite, hormites,attapulgites and sepiolites.

Alternatively, the flocculating material is a colloidal silica, selected from polysilicates and polyaluminosilicates. This includes polyparticulate polysilicic microgels of surface area in excess of 1,000 m²/g, for instance water soluble polyparticulate polyalumino silicate microgels or aluminate polysilicic acid. In addition the flocculating material may be a colloidal silicic acid.

The flocculating material may also be a colloidal borosilicate. The colloidal borosilicate may be prepared by contacting a dilute aqueous solution of an alkali metal silicate with a cation exchange resin to produce a silicic acid and then forming a heel by mixing together a dilute aqueous solution of an alkali metal borate with an alkali metal hydroxide to form an aqueous solution containing 0.01 to 30% B₂O₃, having a pH of from 7 to 10.5.

The cellulosic stock suspension may comprise a filler. The filler may be any of the traditionally used filler materials. For instance, the filler may be clay such as kaolin, or the filler may be a calcium carbonate which could be ground calcium carbonate or in particular precipitated calcium carbonate, or it may be preferred to use titanium dioxide as the filler material. Examples of other filler materials also include synthetic polymeric fillers. The paper making stock may comprise any suitable amount of filler. Generally, the cellulosic suspension comprises at least 5% by weight filler material. Typically the amount of filler will be up to 40% or higher, preferably between 10% and 40% filler.

The flocculating material used in conjunction with the water-in-water polymer dispersion, may be an anionic, nonionic, cationic or amphoteric branched water soluble polymer that has been formed from water soluble ethylenically unsaturated monomer or monomer blend. For instance the branched water soluble polymer may exhibit a) an intrinsic viscosity above 1.5 dl/g and/or saline Brookfield viscosity of above about 2.0 mPa. s.

Alternatively, the flocculating material used in conjunction with the water-in-water polymer dispersion includes cross-linked anionic or amphoteric polymeric micro-particles.

A particularly preferred process employs a multi-component flocculation system comprising as a flocculating agent the water-in-water polymer dispersion and then as a reflocculating agent an anionic flocculating material. The anionic flocculating material includes siliceous materials such as microparticulate silicas, polysilicates, anionic polymeric microbeads and water soluble anionic polymers, including both linear and branched water soluble polymers.

In a particularly preferred embodiment of the process for the manufacture of paper, a further anionic polymeric dispersant is added to the cellulosic suspension, preferably before the water-in-water polymer dispersion is introduced, i.e. the feed point of said further anionic polymeric dispersant is preferably located "upstream" on the paper machine with respect to the feed point of the water-in-water polymer dispersion. The feed point of the further anionic polymeric dispersant may be for instance before one of the pumping stages or prior to the centri-screen. The further anionic polymeric dispersant and the water-in-water polymer dispersion may be added in close proximity, for example without any shear stage between the additions.

Said further dispersant may be identical in structure and/or molecular weight distribution with the anionic polymeric dispersant that is present in the water-in-water polymer dispersion and in the presence of which the *in situ* polymerization reaction is performed. Preferably, however, said further anionic polymeric dispersant differs from the anionic polymeric dispersant that is present in the water-in-water polymer dispersion. The preferred embodiments of the anionic polymeric dispersant described above in connection with the water-in-water polymer dispersion also apply to said further anionic polymeric dispersant that is preferably additionally employed in the process for the manufacture of paper.

Preferably, the further anionic polymeric dispersant is derived (synthesized) from
- 30 to 100 wt.% of (alk)acrylamidoalkyltrialkyl ammonium halides, (alk)acryloyloxyalkyl trialkyl ammonium halides, alkenyl trialkyl ammonium halides and/or dialkenyl dialkyl ammonium halides; and 0 to 70 wt.% of nonionic co-monomers; or
- a copolymerizate of epichlorohydrin and dialkylamine.

It has been surprisingly found that when employing the water-in-water polymer dispersion according to the invention as a flocculating agent in a dual flocculating system, excellent retention and drainage performance, respectively, can be combined with good formation. Usually, retention/drainage performance and formation performance antagonize one another, but surprisingly, the properties of the water-in-water polymer dispersions according to the invention are advantageous in both regards. The water-in-water polymer dispersions show a significantly improved ash retention, which is a well established measure for retention and drainage performance.

### EXAMPLES

The following examples further illustrate the invention but are not to be construed as limiting its scope.

### Preparation of the anionic dispersant polymer

At first, 350 g water and 236 g acrylic acid were weighed into a 2 L vessel. The acrylic acid solution was pre-neutralized with 77 g potassium hydroxide (45 wt %) up to a pH of 3.7. Then the monomer solution was sparked with nitrogen for 30 min by stirring. Subsequently, the aqueous solution was cooled down to 19 °C and the redox initiator system sodium peroxodisulphate and hydrogen peroxide as well as mercaptoethanol were added to the solution. After reaching tₘₐₓ an additional portion of V-50 was given to the product for residual monomer burn out. Now the product was stirred for 2 h at 90 °C. After that the final aqueous product was cooled down to <50°C und neutralized with potassium hydroxide (45 wt%) up to a pH of 7.0.

### Preparation of the anionic aqueous dispersion

Firstly, 272 g acryl amide (50 wt%), 0.5 g Versenex 80, 27 g acrylic acid, 445 g water, 30 g sodium hydroxide (50 wt%), 116 g of the anionic dispersant polymer and various amounts of cross-linker (as 1 wt% solution) were filled into a 2 L glass reaction vessel equipped with an anchor stirrer, thermometer and a torque display and homogenized by stirring. Then the monomer solution was sparked with nitrogen for 30 min by stirring at 200 rpm. Subsequently, the aqueous solution was heated up to 40°C and the initiator system was added into the vessel. After reaching tₘₐₓ, 4 g VA-044 (10 wt%) was added under stirring in order to reduce the monomer content. After some minutes 92 g of the anionic dispersant polymer was added under stirring and the final product was cooled down to 30°C.

| sample | cross-linker | amount of cross-linker [ppm] | product viscosity* [mPas] | salt viscosity* [mPas] |
|---|---|---|---|---|
| *standard* | *-* | *0* | *9.000* | *320* |
| A | PEG-diacrylate | 2.5 | 37.000 | 630 |
| B | PEG-diacrylate | 7.5 | 40.000 | 630 |
| C | PEG-diacrylate | 10 | 40.000 | 530 |

| | | | | |
|---|---|---|---|---|
| * measured via Brookfield viscometer | | | | |

### Results on laboratory fumish

### Experiment 1

### Method:

Furnish type: 100% recycled paper, 3000 ppm lignosulphonate, GCC added as filler.

The laboratory trials were performed using a DFR 04 from BTG Mütek GmbH.
1000 mL of a 0.5% furnish was mixed by 800 rpm for 5 seconds, when the polymer was added, and the furnish sheared for an additional 10 seconds at 1000 rpm. The anionic product was added and the mixing continued for 10 seconds at 500 rpm and the retention was performed according to the supplier of the device.

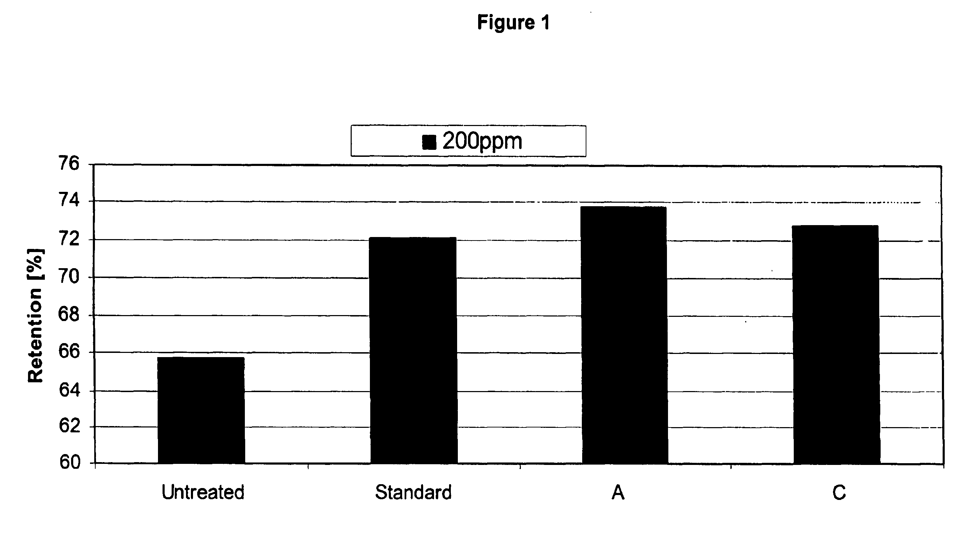

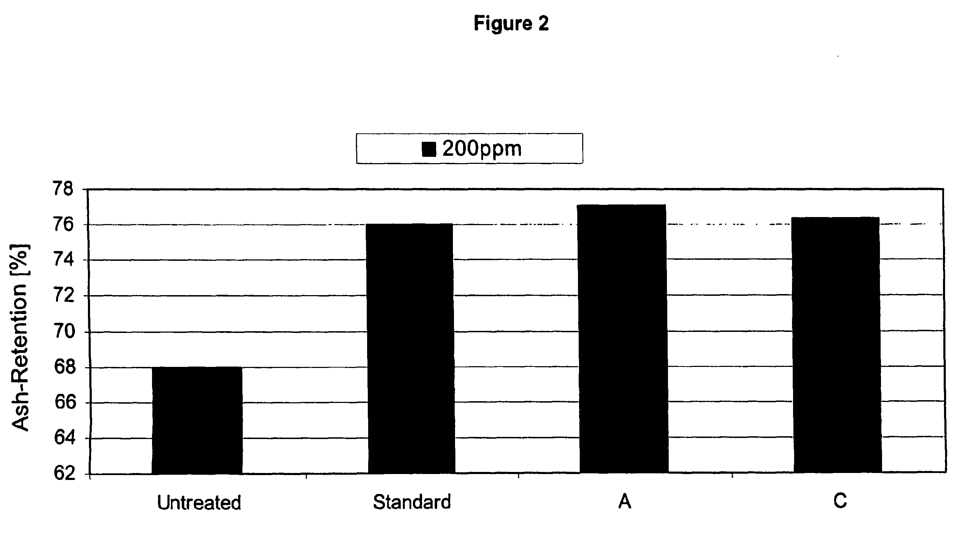

Figures 1 and 2 show the positive impact on the retention and ash retention at 550° C compared to untreated fumish (dosed after addition of 400 ppm standard cationic granular polymer).

## Claims

1. A method for manufacturing a water-in-water polymer dispersion which comprises subjecting an aqueous reaction mixture comprising
(i) an anionic polymeric dispersant and
(ii) a monomer composition comprising
a) at least 5 wt.-% of a non-ionic monomer according to general formula (I) 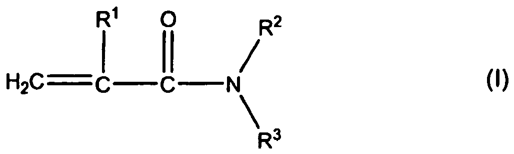 wherein
R¹ means hydrogen or C₁-C₃-alkyl; and
R² and R³ mean, independently of each other, hydrogen, C₁-C₅-alkyl or C₁-C₅-hydroxyalkyl;
based on the total weight of monomers;
b) at least 5 wt.-% of a radically polymerizable anionic monomer;
c) 0.0001 to 1.25 wt.-% of one or more cross-linkers, based on the total weight of monomers;
d) 0 to 1.25 wt.-% of one or more hydrophobic (meth)acrylic acid C₄₋₁₈-alkyl esters, based on the total weight of monomers; and
e) optionally, further ethylenically unsaturated monomers;
to a free radical polymerization reaction such that the resulting water-in-water polymer dispersion contains a cross-linked anionic copolymer.

2. The method according to claim 1, wherein the aqueous reaction mixture does not contain any hydrophobic monomers.

3. The method according to claim 1 or 2, wherein the cross-linker contains 2, 3, 4 or 5 ethylenically unsaturated groups.

4. The method according to any of the preceding claims, wherein the non-ionic monomer according to general formula (I) is selected from the group consisting of (meth)acrylamide, N-methyl(meth)acrylamide, N-isopropyl(meth)acrylamide, N,N-dimethyl(meth)-acrylamide, N,N-diethyl(meth)acrylamide, N-methyl-N-ethyl(meth)acrylamide and N-hydroxyethyl(meth)acrylamide.

5. The method according to any of the preceding claims, wherein the radically polymerizable anionic monomer is selected from the group consisting of
a.) olefinically unsaturated carboxylic acids and carboxylic acid anhydrides and the water-soluble salts thereof;
b.) olefinically unsaturated sulfonic acids and the water-soluble salts thereof;
c.) olefinically unsaturated phosphonic acids and the water-soluble salts thereof; and
d.) sulfomethylated and/or phosphonomethylated acrylamides and the water-soluble salts thereof.

6. The method according to any of the preceding claims, wherein the anionic polymeric dispersant is a water-soluble polymer having a weight average molecular weight M_{w} of at most 2.0×10⁶ g/mol.

7. The method according to any of the preceding claims, wherein the anionic polymeric dispersant is an anionic polymer derived from at least one anionic monomer selected from the group consisting of
a.) olefinically unsaturated carboxylic acids and carboxylic acid anhydrides and the water-soluble salts thereof;
b.) olefinically unsaturated sulfonic acids and the water-soluble salts thereof;
c.) olefinically unsaturated phosphonic acids and the water-soluble salts thereof; and
d.) sulfomethylated and/or phosphonomethylated acrylamides and the water-soluble salts thereof.

8. The method according to claim 7, wherein the at least one anionic monomer differs from the radically polymerizable anionic monomer.

9. The method according to any of the preceding claims, wherein before and/or after radical polymerization, a water-soluble salt is added in quantities of 0.1 to 5.0 wt.-%, based on the total weight of the aqueous reaction mixture.

10. A water-in-water polymer dispersion comprising
(i) an anionic polymeric dispersant and
(ii) a cross-linked anionic copolymer derived from a monomer composition containing
a) at least 5 wt.-% of a non-ionic monomer according to general formula (I) 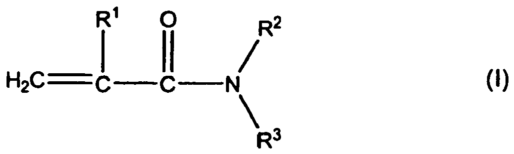 wherein
R¹ means hydrogen or C₁-C₃-alkyl; and
R² and R³ mean, independently of each other, hydrogen, C₁-C₅-alkyl or C₁-C₅-hydroxyalkyl;
based on the total weight of monomers;
b) at least 5 wt.-% of a radically polymerizable anionic monomer;
c) 0.0001 to 1.25 wt.-% of one or more ethylenically unsaturated cross-linkers, based on the total weight of monomers;
d) 0 to 1.25 wt.-% of one or more hydrophobic (meth)acrylic acid C₄₋₁₈-alkyl esters, based on the total weight of monomers; and
e) optionally, further ethylenically unsaturated monomers.

11. The dispersion according to claim 10, which is obtainable by the method according to any of claims 1 to 9.

12. The dispersion according to claim 10 or 11, which has a polymer content of 40±20 wt.-%, based on the total weight of the dispersion.

13. The dispersion according to any of claims 10 to 12, which contains 0.5 to 5.0 wt.-% of at least one acid and/or 0.5 to 5.0 wt.-% of at least one salt, the overall content of acid and salt amounting to a maximum of 5.0 wt.-%, based on the total weight of the dispersion.

14. The dispersion according to any of claims 10 to 13, where the relative weight ratio of cross-linked anionic copolymer : anionic polymeric dispersant is > 1:1.

15. Use of the aqueous polymer dispersion according to any of claims 10 to 14
- as a flocculant in the sedimentation, flotation or filtration of solids;
- as a thickener;
- as a contaminant control;
- as a dry strength aid; or
- as a retention agent or drainage aid in papermaking.

## Patentansprüche

1. Ein Verfahren zur Herstellung einer Wasser-in-Wasser Polymerdispersion umfassend die Umsetzung einer wässrigen Reaktionsmischung umfassend
(i) ein anionisches polymeres Dispergiermittel und
(ii) eine Monomerzusammensetzung umfassend
a) wenigstens 5 Gew.-% von einem nicht-ionischen Monomer gemäß der allgemeinen Formel (I) 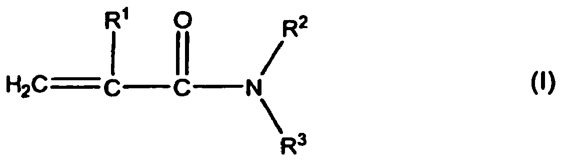 wobei
R¹ für Wasserstoff oder C₁-C₃-Alkyl steht; und
R² und R³, unabhängig voneinander, für Wasserstoff, C₁-C₅-Alkyl oder C₁-C₅-Hydroxyalkyl stehen;
basierend auf dem Gesamtgewicht der Monomere;
b) wenigstens 5 Gew.-% von einem radikalisch polymerisierbaren anionischen Monomer;
c) 0,0001 bis 1,25 Gew.-% von einem oder mehreren Vernetzern, basierend auf dem Gesamtgewicht der Monomere;
d) 0 bis 1,25 Gew.-% von einem oder mehreren hydrophoben (Meth)acrylsäure C₄-C₁₈-Alkylestern, basierend auf dem Gesamtgewicht der Monomere; und
e) gegebenenfalls weitere ethylenisch ungesättigte Monomere;
in einer freien Radikalpolymerisationsreaktion, sodass die entstehende Wasser-in-Wasser Polymerdispersion ein quervernetztes anionisches Copolymer enthält.

2. Das Verfahren gemäß Anspruch 1, wobei die wässrige Reaktionsmischung keine hydrophoben Monomere enthält.

3. Das Verfahren gemäß Anspruch 1 oder 2, wobei der Vernetzer 2, 3, 4 oder 5 ethylenisch ungesättigte Gruppen enthält.

4. Das Verfahren gemäß wenigstens einem der vorhergehenden Ansprüche, wobei das nicht-ionische Monomer gemäß der allgemeinen Formel (I) ausgewählt wird aus der Gruppe bestehend aus (Meth)acrylamid, N-Methyl(meth)acrylamid, N-Isopropyl(meth)acrylamid, N,N-Dimethyl(meth)-acrylamid, N,N-Diethyl(meth)acrylamid, N-Methyl-N-ethyl(meth)acrylamid und N-Hydroxyethyl(meth)acrylamid.

5. Das Verfahren gemäß wenigstens einem der vorhergehenden Ansprüche, wobei das radikalisch polymerisierbare anionische Monomer ausgewählt wird aus der Gruppe bestehend aus
a.) olefinisch ungesättigte Carbonsäuren und Carbonsäureanhydride und deren wasserlösliche Salze;
b.) olefinisch ungesättigte Sulfonsäuren und deren wasserlösliche Salze;
c.) olefinisch ungesättigte Phosphonsäuren und deren wasserlösliche Salze; und
d.) sulfomethylierte und/oder phosphonomethylierte Acrylamide und deren wasserlösliche Salze.

6. Das Verfahren gemäß wenigstens einem der vorhergehenden Ansprüche, wobei das anionische polymere Dispergiermittel ein wasserlösliches Polymer ist, das ein gewichtsmittleres Molekulargewicht M_{w} von wenigstens 2,0x10⁶ g/mol aufweist.

7. Das Verfahren gemäß wenigstens einem der vorhergehenden Ansprüche, wobei das anionische polymere Dispergiermittel ein anionisches Polymer ist, das abgeleitet wird von wenigstens einem anionischen Monomer ausgewählt aus der Gruppe bestehend aus
a.) olefinisch ungesättigte Carbonsäuren und Carbonsäureanhydride und deren wasserlösliche Salze;
b.) olefinisch ungesättigte Sulfonsäuren und deren wasserlösliche Salze;
c.) olefinisch ungesättigte Phosphonsäuren und deren wasserlösliche Salze; und
d.) sulfomethylierte und/oder phosphonomethylierte Acrylamide und deren wasserlösliche Salze.

8. Das Verfahren gemäß Anspruch 7, wobei sich das wenigstens eine anionische Monomer von dem radikalisch polymerisierbaren anionischen Monomer unterscheidet.

9. Das Verfahren gemäß wenigstens einem der vorhergehenden Ansprüche, wobei vor und/oder nach der Radikalpolymerisation ein wasserlösliches Salz in einer Menge von 0,1 bis 5,0 Gew.-% hinzugefügt wird, basierend auf dem Gesamtgewicht der wässrigen Reaktionsmischung.

10. Eine Wasser-in-Wasser Polymerdispersion umfassend
(i) ein anionisches polymeres Dispergiermittel und
(ii) ein quervernetztes anionisches Copolymer abgeleitet von einer Monomerzusammensetzung enthaltend
a) wenigstens 5 Gew.-% von einem nichtionischen Monomer gemäß der allgemeinen Formel (I) 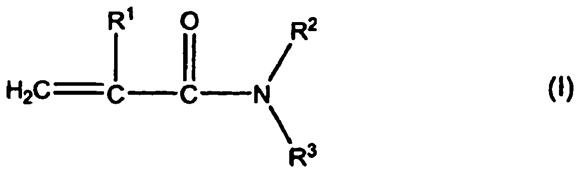 wobei
R¹ für Wasserstoff oder C₁-C₃-Alkyl steht; und
R² und R³, unabhängig voneinander, für Wasserstoff, C₁-C₅-Alkyl oder C₁-C₅-Hydroxyalkyl stehen;
basierend auf dem Gesamtgewicht der Monomere;
b) wenigstens 5 Gew.-% von einem radikalisch polymerisierbaren anionischen Monomer;
c) 0,0001 bis 1,25 Gew.-% von einem oder mehreren ethylenisch ungesättigten Vernetzern, basierend auf dem Gesamtgewicht der Monomere;
d) 0 bis 1,25 Gew.-% von einem oder mehreren hydrophoben (Meth)acrylsäure C₄₋₁₈-Alkylestern, basierend auf dem Gesamtgewicht der Monomere; und
e) gegebenenfalls weitere ethylenisch ungesättigte Monomere.

11. Die Dispersion gemäß Anspruch 10, die durch das Verfahren gemäß wenigstens einem der Ansprüche 1 bis 9 erhältlich ist.

12. Die Dispersion gemäß Anspruch 10 oder 11, die einen Gehalt an Polymer von 40±20 Gew.-%, basierend auf dem Gesamtgewicht der Dispersion, aufweist.

13. Die Dispersion gemäß einem oder mehreren der Ansprüche 10 bis 12, die 0,5 bis 5,0 Gew.-% von wenigstens einer Säure und/oder 0,5 bis 5,0 Gew.-% von wenigstens einem Salz enthält, wobei der Gesamtanteil von Säure und Salz sich auf ein Maximum von 5,0 Gew.-% beläuft, basierend auf dem Gesamtgewicht der Dispersion.

14. Die Dispersion gemäß einem oder mehreren der Ansprüche 10 bis 13, wobei das relative Gewichtsverhältnis von quervernetztem anionischen Copolymer : anionischem polymeren Dispergiermittel > 1:1 ist.

15. Verwendung einer wässrigen Polymerdispersion gemäß wenigstens einem der Ansprüche 10 bis 14
- als ein Flockungsmittel bei der Ablagerung, Flotation oder Filtration von Feststoffen;
- als Verdickungsmittel;
- als Mittel zur Schadstoffbegrenzung;
- als Mittel für die Trockenfestigkeit; oder
- als Retentionsmittel oder Entwässerungshilfsmittel bei der Papierherstellung.

## Revendications

1. Procédé de fabrication d'une dispersion de polymère eau dans eau consistant à soumettre un mélange réactionnel aqueux comprenant :
(i) un dispersant polymère anionique et
(ii) une composition de monomères comprenant :
a) au moins 5 % en poids d'un monomère non ionique selon la formule générale (I) 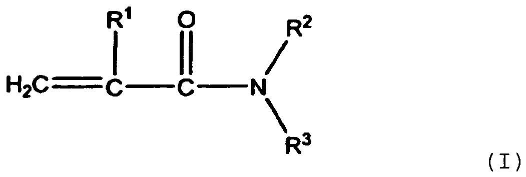 dans laquelle
R¹ est un atome d'hydrogène ou un groupe alkyle C₁-C₃ ; et
R² et R³ sont chacun indépendamment un atome d'hydrogène, un groupe alkyle C₁-C₅ ou un groupe hydroxyalkyle C₁-C₅ ;
relativement au poids total des monomères ;
b) au moins 5 % en poids d'un monomère anionique polymérisable par polymérisation radicalaire ;
c) de 0,0001 % à 1,25 % en poids d'un ou plusieurs agents de réticulation, relativement au poids total des monomères ;
d) de 0 à 1,25 % en poids d'un ou plusieurs alkylesters C₄₋₁₈ hydrophobes d'acide (méth)acrylique, relativement au poids total des monomères ; et
e) éventuellement, d'autres monomères à insaturation éthylénique ;
à une réaction de polymérisation radicalaire telle que la dispersion de polymère eau dans eau ainsi obtenue contienne un copolymère anionique réticulé.

2. Procédé selon la revendication 1, dans lequel le mélange réactionnel aqueux ne contient aucun monomère hydrophobe.

3. Procédé selon la revendication 1 ou 2, dans lequel l'agent de réticulation contient 2, 3, 4 ou 5 groupes à insaturation éthylénique.

4. Procédé selon l'une quelconque des revendications précédentes, dans lequel le monomère non ionique selon la formule générale (I) est sélectionné dans le groupe constitué du (méth)acrylamide, du N-méthyl(méth)acrylamide, du N-isopropyl(méth)acrylamide, du N,N-diméthyl(méth)acrylamide, du N,N-diéthyl(méth)acrylamide, du N-méthyl-N-éthyl(méth)acrylamide et du N-hydroxyéthyl(méth)acrylamide.

5. Procédé selon l'une quelconque des revendications précédentes, dans lequel le monomère anionique polymérisable par polymérisation radicalaire est sélectionné dans le groupe constitué de :
a.) acides carboxyliques à insaturation oléfinique et anhydrides d'acides carboxyliques à insaturation oléfinique et les sels hydrosolubles de ceux-ci ;
b.) acides sulfoniques à insaturation oléfinique et les sels hydrosolubles de ceux-ci ;
c.) acides phosphoniques à insaturation oléfinique et les sels hydrosolubles de ceux-ci ;
d.) acrylamides sulfométhylés et/ou phosphonométhylés et les sels hydrosolubles de ceux-ci.

6. Procédé selon l'une quelconque des revendications précédentes, dans lequel le dispersant polymère anionique est un polymère hydrosoluble ayant une masse moléculaire moyenne en poids M_{w} d'au maximum 2,0 x 10⁶ g/mol.

7. Procédé selon l'une quelconque des revendications précédentes, dans lequel le dispersant polymère anionique est un polymère anionique dérivé d'au moins un monomère anionique sélectionné dans le groupe constitué de :
a.) acides carboxyliques à insaturation oléfinique et anhydrides d'acides carboxyliques à insaturation oléfinique et les sels hydrosolubles de ceux-ci ;
b.) acides sulfoniques à insaturation oléfinique et les sels hydrosolubles de ceux-ci ;
c.) acides phosphoniques à insaturation oléfinique et les sels hydrosolubles de ceux-ci ;
d.) acrylamides sulfométhylés et/ou phosphonométhylés et les sels hydrosolubles de ceux-ci.

8. Procédé selon la revendication 7, dans lequel ledit au moins un monomère anionique est différent du monomère anionique polymérisable par polymérisation radicalaire.

9. Procédé selon l'une quelconque des revendications précédentes, dans lequel avant et/ou après la polymérisation radicalaire, un sel hydrosoluble est ajouté dans des quantités de 0,1 % à 5,0 % en poids, relativement au poids total du mélange réactionnel aqueux.

10. Dispersion de polymère eau dans eau comprenant
(i) un dispersant polymère anionique et
(ii) un copolymère anionique réticulé dérivé d'une composition de monomères contenant :
a) au moins 5 % en poids d'un monomère non ionique selon la formule générale (I) 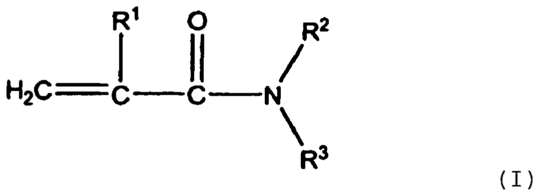 dans laquelle
R¹ est un atome d'hydrogène ou un groupe alkyle C₁-C₃ ; et
R² et R³ sont chacun indépendamment un atome d'hydrogène, un groupe alkyle C₁-C₅ ou un groupe hydroxyalkyle C₁-C₅ ;
relativement au poids total des monomères ;
b) au moins 5 % en poids d'un monomère anionique polymérisable par polymérisation radicalaire ;
c) de 0,0001 % à 1,25 % en poids d'un ou plusieurs agents de réticulation à insaturation éthylénique, relativement au poids total des monomères ;
d) de 0 à 1,25 % en poids d'un ou plusieurs alkylesters C₄₋₁₈ hydrophobes d'acide (méth)acrylique, relativement au poids total des monomères ; et
e) éventuellement, d'autres monomères à insaturation éthylénique.

11. Dispersion selon la revendication 10, laquelle peut être obtenue par le procédé selon l'une quelconque des revendications 1 à 9.

12. Dispersion selon la revendication 10 ou 11, laquelle a une teneur en polymère de 40±20 % en poids relativement au poids total de la dispersion.

13. Dispersion selon l'une quelconque des revendications 10 à 12, laquelle contient 0,5 % à 5,0 % en poids d'au moins un acide et/ou 0,5 % à 5,0 % en poids d'au moins un sel, la teneur totale en acide et en sel représentant au maximum 5,0 % en poids relativement au poids total de la dispersion.

14. Dispersion selon l'une quelconque des revendications 10 à 13, dans laquelle le rapport pondéral relatif du copolymère anionique réticulé contre le dispersant polymère anionique est supérieur à 1:1.

15. Utilisation de la dispersion aqueuse de polymère selon l'une quelconque des revendications 10 à 14
- comme floculant dans la sédimentation, la flottation ou la filtration de solides ;
- comme épaississant ;
- comme produit anti-contamination ;
- comme agent de résistance à l'état sec ; ou
- comme agent de rétention ou aide de drainage dans la fabrication du papier.
